# EUROPEAN PATENT APPLICATION

(11) **EP 4 564 266 A1**
(43) Date of publication of application: **04.06.2025**
(21) Application number: 23845947.3
(22) Date of filing: 10.05.2023
(51) Int. Cl.: G06Q 20/18, G06Q 30/06

(54) **INFORMATION PROCESSING TERMINAL AND RECORDING MEDIUM**

(30) Priority: 26.07.2022 JP 2022118973
(71) Applicant: Toshiba TEC Kabushiki Kaisha, Tokyo 141-8562 (JP)
(72) Inventor: NAKATSUKASA, Fumio, Tokyo 141-8562 (JP); OTANI, Yuna, Tokyo 141-8562 (JP); KURIBAYASHI, Yoshiki, Izunokuni-shi, Shizuoka 410-2392 (JP); NISHIKAWA, Shino, Tokyo 141-8562 (JP); YAMADA, Masaya, Izunokuni-shi, Shizuoka 410-2392 (JP)
(74) Representative: Bandpay & Greuter
(86) International application number: PCT/JP2023/017553
(87) International publication number: WO 2024/024208

(57) **Abstract**

An information processing terminal according to an embodiment includes a determination unit, a display control unit, an acquisition unit, and a transmission unit. The determination unit determines whether information regarding a registration of a product satisfies a photographing condition. The display control unit allows a display unit to display an automatic photographing guidance for the product based on a determination result of the determination unit. The acquisition unit acquires, based on automatic photographing of the product, photographed image data of the photographed product. The transmission unit transmits the photographed image data acquired by the acquisition unit.

## Description

### FIELD

An embodiment of the present invention relates to an information processing terminal and a recording medium.

### BACKGROUND

There is a known transaction processing system in which customers, when making purchases on a sales floor where products are displayed, operate a mobile terminal, such as a smartphone or tablet terminal, by themselves to input data related to products to be purchased.

In this type of transaction processing system, a dedicated self-checkout machine processes the accounts of customers who have input data related to products to be purchased in shopping baskets or the like by themselves, or so-called self-checkout customers. In such a system, in order to prevent customers from forgetting to register a product and performing fraudulent registrations, store clerks check products to be purchased put in a shopping basket or the like by the customers and registered products at a checkout area during checkout.

However, it is difficult to check all customers and all products to be purchased against products to be purchased. For this reason, measures are required to prevent forgetting to register a product and to prevent a fraudulent registration.

### CITATION LIST

### PATENT LITERATURE

Patent Literature 1: Jpn. Pat. Appln. KOKAI Publication No. 2020-107122

### SUMMARY

A problem to be solved by an embodiment of the present invention is to provide a technique for preventing forgetting to register a product and preventing a fraudulent registration.

### BRIEF DESCRIPTION OF THE DRAWINGS

FIG. 1 is a block diagram illustrating a schematic configuration of a transaction processing system according to an embodiment.
FIG. 2 is a perspective view illustrating an example of a shopping cart according to an embodiment.
FIG. 3 is a sequence diagram used to explain an operation before purchases of a customer who uses the transaction processing system.
FIG. 4 is a sequence diagram used to explain an operation during purchases and before checkout of the same customer.
FIG. 5 is a sequence diagram used to explain a checkout operation of the same customer on a dedicated checkout machine.
FIG. 6 is a schematic diagram illustrating an example of a store entry code reading screen displayed on a smartphone according to an embodiment.
FIG. 7 is a schematic diagram illustrating an example of a registration-in-progress screen displayed on a smartphone according to an embodiment.
FIG. 8 is a schematic diagram illustrating an example of a scanning screen displayed on a smartphone according to an embodiment.
FIG. 9 is a schematic diagram illustrating an example of a registration-in-progress screen displayed on a smartphone according to an embodiment.
FIG. 10 is a schematic diagram illustrating an example of a checkout screen displayed on a smartphone according to an embodiment.
FIG. 11 is a block diagram schematically illustrating a configuration example of a monitoring server according to an embodiment.
FIG. 12 is a block diagram schematically illustrating a configuration example of a smartphone according to an embodiment.
FIG. 13 is a block diagram schematically illustrating a configuration example of a monitoring terminal according to an embodiment.
FIG. 14 is a diagram illustrating a main data structure of a first index file stored in a transaction data storage area according to an embodiment.
FIG. 15 is a diagram illustrating a main data structure of a first transaction file stored in a transaction data storage area according to an embodiment.
FIG. 16 is a diagram illustrating a main data structure of photographed image management data stored in a photographed image storage area according to an embodiment.
FIG. 17 is a schematic diagram illustrating an example of a guidance screen displayed on a smartphone according to an embodiment.
FIG. 18 is a flowchart illustrating an example of an information processing procedure by a smartphone according to an embodiment.
FIG. 19 is a schematic diagram illustrating an example of a photographing guide screen displayed on a smartphone according to an embodiment.
FIG. 20 is a flowchart illustrating another example of an information processing procedure by a smartphone according to an embodiment.
FIG. 21 is a schematic diagram illustrating an example of a registered product details screen displayed on a monitoring terminal according to an embodiment.
FIG. 22 is a schematic diagram illustrating an example of a registered product checking screen displayed on a monitoring terminal according to an embodiment.
FIG. 23 is a schematic diagram illustrating an example of a registered product checking screen displayed on a monitoring terminal according to an embodiment.
FIG. 24 is a flowchart illustrating an example of an information processing procedure by a monitoring terminal according to an embodiment.

### DETAILED DESCRIPTION

In an embodiment, an information processing terminal includes a determination unit, a display control unit, an acquisition unit, and a transmission unit. The determination unit determines whether information regarding a registration of a product satisfies a photographing condition. The display control unit allows a display unit to display an automatic photographing guidance for the product based on a determination result of the determination unit. The acquisition unit acquires, based on automatic photographing of the product, photographed image data of the photographed product. The transmission unit transmits the photographed image data acquired by the acquisition unit.

Hereinafter, an embodiment will be described with reference to the drawings.

Note that the present embodiment exemplifies a transaction processing system in which, when a customer purchases products on a sales floor where products are displayed, the customer operates a smartphone, which is a mobile terminal, by themselves to input data related to a product to be purchased, and also performs checkout by themselves using a dedicated checkout machine. The smartphone is an example of an information processing apparatus operated by the customer. In the following description, the customer may be read as a user, a consumer, or a member.

### (Configuration of Transaction processing system 100)

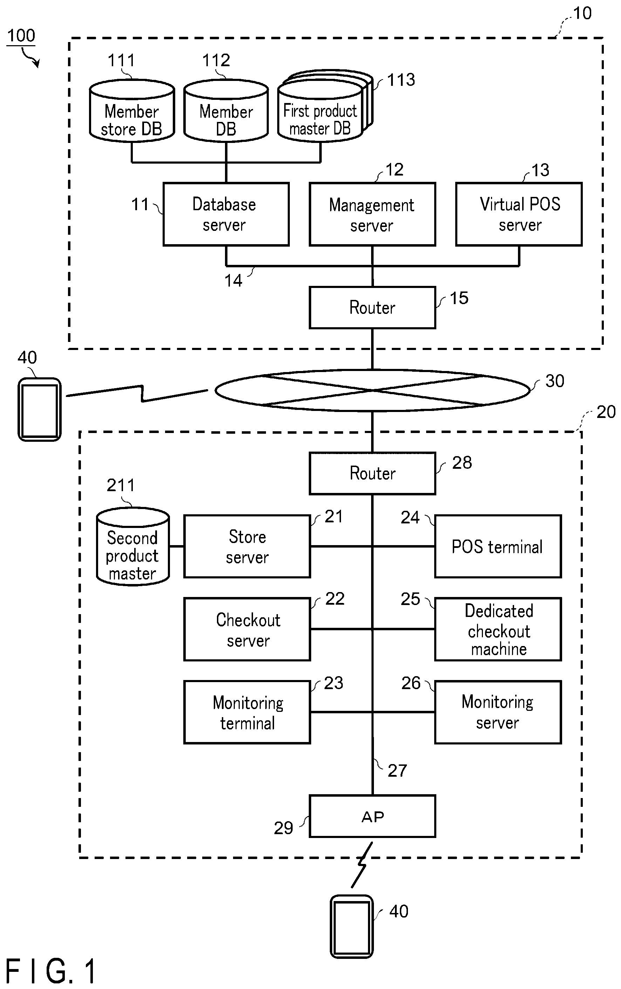

FIG. 1 is a block diagram illustrating a schematic configuration of a transaction processing system 100 according to the present embodiment. The transaction processing system 100 includes a server system 10 using cloud computing and a point of sales (POS) system 20 built in a member store. The server system 10 and the POS system 20 can perform bidirectional data communication through a network 30 using the Internet protocol. The network 30 is a wide-area network in which public lines or dedicated lines are used as relay networks, and wired local area network (LAN), wireless LAN, mobile communication networks, mobile phone communication networks, and the like are used as access networks. Therefore, a smartphone 40 using the mobile phone communication networks can access the server system 10 via the network 30.

The member store is a store that has signed a usage contract with a management company of the server system 10. Note that FIG. 1 illustrates the POS system 20 of a member store. It goes without saying that POS systems of other member stores are similarly connected to the network 30. However, the POS systems of other member stores do not necessarily have the same configuration as the POS system 20 illustrated in FIG. 1. Some of the configurations of the POS system can vary depending on the member store.

The server system 10 includes a database server 11, a management server 12, and a virtual POS server 13, and connects the respective servers via a communication line 14. In addition, the server system 10 connects a router 15 to the communication line 14 and is connected to the network 30 via the router 15.

The database server 11 is a computer that provides a service for managing a member store database 111, a member database 112, a first product master 113, and the like of each member store.

The member store database 111 is a collection of member store records created for each member store. A member store record is a data record in which a unique store ID set for each member store and various types of data regarding the member store are recorded. The data of the member store record includes a network address and the like necessary for data communication with the member store via the network 30.

The member database 112 is a collection of member records created for each consumer who has registered for membership to make purchases using the transaction processing system 100. A member record is a data record in which a unique member ID set for each consumer and various types of data regarding the consumer are recorded.

The first product master 113 of each member store is a collection of product records created for each product to be sold by the member store. A product record is a data record in which a unique product code set for each product and various types of data regarding the product are recorded. The data of the product record includes a product name, a price, and the like. Each first product master 113 is uploaded from the POS system 20 of the corresponding member store to the database server 11 at a predetermined time before opening, for example.

The first product master 113 may be managed by the virtual POS server 13. In addition, the member store database 111 and the member database 112 can be managed by the management server 12, and the database server 11 can be omitted.

The management server 12 is a computer that cooperates with the database server 11 and the virtual POS server 13 and provides a service of managing information related to a transaction of a customer who makes purchases at the member store using the transaction processing system 100. The virtual POS server 13 is a computer that provides a service of virtually registering sales data of a product to be purchased by the customer in accordance with a POS application. Main functions of the management server 12 and the virtual POS server 13 will be clarified in an operation description described later.

The POS system 20 includes a store server 21, a checkout server 22, a monitoring terminal 23, a POS terminal 24, a dedicated checkout machine 25, and a monitoring server 26, and connects them via an in-store network 27. In addition, the POS system 20 also connects a router 28 to the in-store network 27, and is connected to the network 30 via the router 28. Furthermore, the POS system 20 connects an access point 29 to the in-store network 27, and enables data communication using a wireless LAN with a mobile terminal, such as the smartphone 40 or a tablet terminal, via the access point 29.

The store server 21 is a computer that provides, based on information on a transaction settled in a member store in which the POS system 20 is built, a service of managing sales information, product inventory information, order information, and the like of the member store.

The store server 21 includes a second product master 211. The second product master 211 is a collection of product records created for each product to be sold in the member store. A product record is a data record in which a unique product code set for each product and various types of data regarding the product are recorded. The data of the product record includes a product name, a price, and the like. That is, the second product master 211 becomes the first product master 113 by being uploaded to the server system 10. However, when a price or the like is changed in the business hours, the change is reflected in the data of the second product master 211. Therefore, depending on the product, the price or the like may be different between the first product master 113 and the second product master 211.

The store server 21 is a computer that provides a service of supporting a member monitoring function by the monitoring terminal 23. The member monitoring function is a function of monitoring the circumstances of a customer making purchases using the transaction processing system 100. With this member monitoring function, the monitor of the monitoring terminal 23 displays a list of registered products for which the customer has input data on the sales floor using the smartphone 40. A registered product is a product before settlement for which the customer has input data using the smartphone 40. The registered product is also simply referred to as a product. The monitoring terminal 23 displays a monitoring image on the monitor. The monitoring image is an image for monitoring information of a registered product input using the smartphone 40, the status of the smartphone 40, and the like. The monitoring image includes a list of registered products, a photographed image obtained by photographing a product to be purchased, and the like. The product to be purchased is a product before settlement that the customer has put in a shopping basket or the like for purchase. The member monitoring function includes a function of checking, for a monitoring target, information of the registered product by the customer against the product to be purchased. The monitoring target includes a product or a product registration for which there is a suspicion that the registration has been forgotten or is a fraudulent registration. In addition, if an event occurs that should be notified to a store clerk by the data input, a warning is displayed on the monitor. The event that should be notified to a store clerk is, for example, a case where the customer purchases age-restricted alcohol, cigarettes, or the like, or a case where a registration error occurs because the product code of a scanned barcode is not set in the second product master 211.

The checkout server 22 is a computer that provides a service of supporting checkout performed by a member using the dedicated checkout machine 25. The function of the checkout server 22 will be clarified in an operation description described later.

The POS terminal 24 is a checkout machine for mainly settling a transaction with a customer who does not use the transaction processing system 100. The POS terminal 24 is operated by a store clerk. The POS terminal 24 can also settle a transaction with a customer who uses the transaction processing system 100. Note that the POS terminal may be separated into a registration machine and a checkout machine, the registration machine may be operated by a store clerk, and the checkout machine may be a semi-self-checkout type POS terminal operated by a customer. The POS terminal may be a full-self-checkout type POS terminal with which registration and checkout processes are performed by a customer themselves.

The dedicated checkout machine 25 is a checkout machine for settling a transaction with a customer who uses the transaction processing system 100. The dedicated checkout machine 25 is operated by the customer. A customer who does not use the transaction processing system 100 cannot settle at the dedicated checkout machine 25.

The dedicated checkout machine 25 has a function of scanning a checkout barcode displayed on the smartphone 40 used by a customer who uses the transaction processing system 100, a payment processing function of a charge amount corresponding to various payment methods such as electronic money, a credit card, and cash, a recharge function of electronic money, and the like.

The monitoring server 26 is a computer that cooperates with the server system 10 and monitors information of a registered product for which a customer has input data using the smartphone 40 on the sales floor. The monitoring server 26 cooperates with the store server 21 and performs information processing for achieving the member monitoring function by the monitoring terminal 23. The function of the monitoring server 26 will be clarified in an operation description described later. The monitoring server 26 is an example of the information processing apparatus.

### (Configuration of Shopping cart)

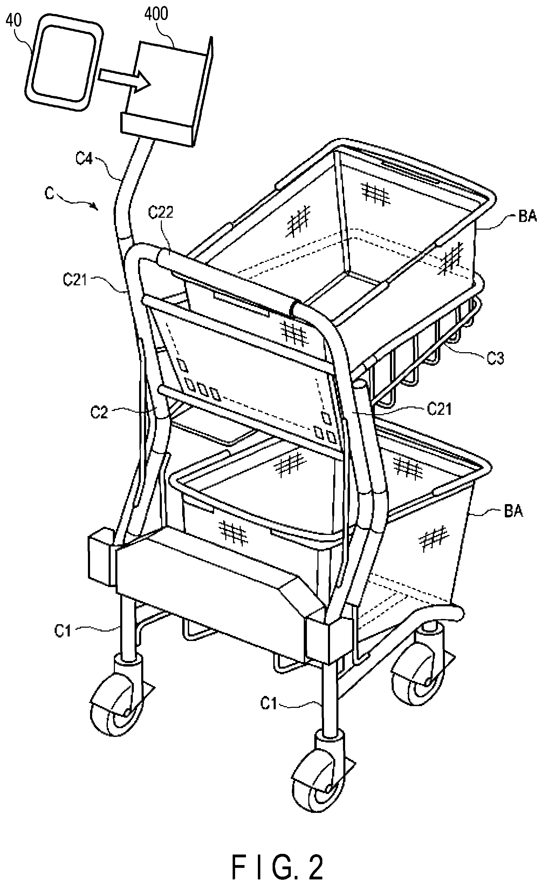

FIG. 2 is a perspective view illustrating an example of a cart C according to an embodiment. The cart C includes a caster part C1 for movement, a handle frame part C2, and a basket receiving part C3. The caster part C1 has four wheels for smooth movement on a floor surface. The handle frame part C2 includes a pair of vertical frames C21 and C21 erected on the rear wheel side of the caster part C1, and a handle bar C22 connecting upper ends of the vertical frames C21 and C21. The basket receiving part C3 is located on the front side from a middle portion of the handle frame part C2. In the cart C, a store-supplied shopping basket BA can be placed in the basket receiving part C3 and a lower tier thereof.

The vertical frame C21 of the cart C is attached with a pole C4. The pole C4 is provided with a stand 400 for the smartphone 40 at a tip thereof. A consumer using the cart C can place their own smartphone 40 on the stand 400 to make purchases.

### (Operations of Transaction processing system 100)

Next, main operations of the transaction processing system are described. The operations are described in the order of advance preparation, before purchases, during purchases, before checkout, and checkout.

### <Advance preparation>

A consumer who desires to make purchases at a member store using the transaction processing system 100 first installs a dedicated application program (hereinafter, referred to as a shopping application) on the smartphone 40 and registers for membership. The membership registration is performed to the management server 12 of the server system 10 via the network 30. The management server 12 issues a member ID unique to the consumer who has registered for membership, and registers a member record that records the member ID in the member database 112. In addition, the management server 12 notifies the smartphone 40 of the consumer who has registered for membership of the member ID via the network 30. The smartphone 40 stores the member ID in association with the shopping application.

The consumer becomes a member by registering for membership. The member can register to use electronic money that can be used in the member store. The use registration is performed from the smartphone 40 to the management server 12 via network 30. The management server 12 records an electronic money ID of the electronic money registered for use in the member record that records the member ID of the member. Note that the registration to use electronic money is not essential.

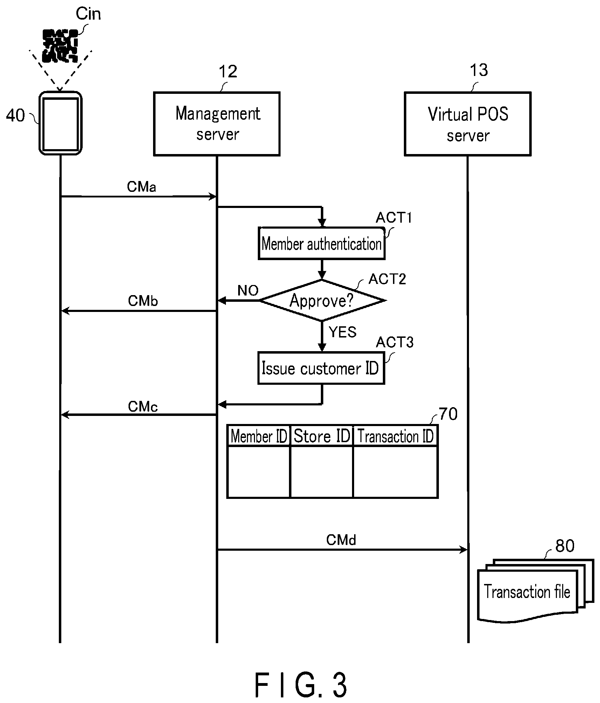

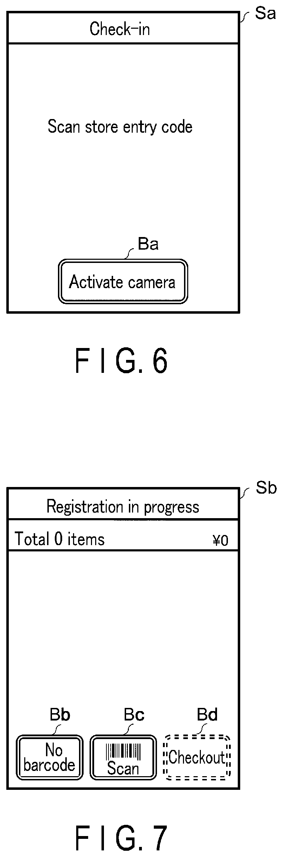

### <Before purchases (see FIGS. 3 and 6)>

The member operates the smartphone 40 to activate the shopping application before entering the member store. When the shopping application is activated, the screen of the touch panel of the smartphone 40 transitions to a store entry code reading screen Sa (FIG. 6). The store entry code reading screen Sa is a screen for reading a store entry code Cin (FIG. 3) with a camera on the smartphone 40.

The store entry code Cin is prepared at the entrance of the member store. For example, the store entry code Cin is printed on a paper medium and attached to the entrance. For example, the store entry code Cin is displayed on a display placed at the entrance. The store entry code Cin is a code obtained by encoding setting information related to the member store in, for example, a two-dimensional code system. The setting information includes the store ID set to the member store, wireless LAN data, and the like. The wireless LAN data is an SSID, a password, security information, and the like necessary for the smartphone 40 to connect to the access point 29 using the wireless LAN.

As illustrated in FIG. 6, a camera activation button Ba is displayed on the store entry code reading screen Sa. The member touches the camera activation button Ba. Then, the camera of the smartphone 40 is activated, and the member points the lens of the camera at the store entry code Cin. The camera scans the store entry code Cin.

When the store entry code Cin is scanned, the smartphone 40 transmits a store entry request command CMa (FIG. 3) to the management server 12 via the network 30. The store entry request command CMa includes at least the member ID, and the store ID included in the store entry code Cin.

The management server 12 acquires the member ID from the store entry request command CMa and performs member authentication (FIG. 3, ACT1). The member authentication is performed by checking whether the member ID is managed as a valid member ID. For example, an invalid flag is recorded in a member record having a member ID of a consumer who has lost the qualification as a member due to a withdrawal application, a fraudulent act, or the like. When acquiring the member ID of the member record that records the invalid flag from the store entry request command CMa, the management server 12 rejects the member authentication. When acquiring the member ID of the member record that does not record the invalid flag from the store entry request command CMa, the management server 12 approves the member authentication.

The management server 12 determines whether to approve or reject the member authentication (FIG. 3, ACT2). When rejecting the member authentication, the management server 12 transmits a store entry rejection command CMb to the smartphone 40. The store entry rejection command CMb is transmitted to the smartphone 40 via the network 30. When receiving the store entry rejection command CMb, the smartphone 40 stops the shopping application. Therefore, the customer cannot make so-called self-checkout purchases in which the customer operates the smartphone 40 by themselves in the member store to input data related to a product to be purchased.

When approving the member authentication, the management server 12 issues a transaction ID (FIG. 3, ACT3). The transaction ID is a unique ID that is set for each purchase, that is, a product transaction that the member makes at the member store. For example, a unique transaction ID is issued by a combination of a store code, a date, and a serial number. The management server 12 associates the member ID and the store ID acquired from the store entry request command CMa with the issued transaction ID and describes them in a linkage table 70 (FIG. 3). That is, the linkage table 70 is a data table that stores, in association with the member ID of the consumer who makes self-checkout purchases, the store ID of the member store at which the consumer makes purchases and the unique transaction ID issued for the transaction.

The management server 12 transmits a store entry approval command CMc to the smartphone 40. The store entry approval command CMc is transmitted to the smartphone 40 via the network 30. When receiving the store entry approval command CMc, the smartphone 40 uses the wireless LAN data acquired from the store entry code Cin to connect to the access point 29 using the wireless LAN. When the smartphone 40 is connected to the access point 29 using the wireless LAN, the screen of the touch panel transitions to a purchase start screen. The purchase start screen is a screen that prompts the consumer to start purchases. On the purchase start screen, a purchase start button is displayed.

Meanwhile, the management server 12 that has transmitted the store entry approval command CMc transmits a transaction file creation instruction command CMd to the virtual POS server 13. The creation instruction command CMd includes the store ID and the transaction ID stored in association with the member ID in the linkage table 70. When receiving the creation instruction command CMd, the virtual POS server 13 creates a transaction file 80 (FIG. 3) in a storage unit. Then, the virtual POS server 13 describes the store ID and the transaction ID included in the creation instruction command CMd in the transaction file 80. The transaction file 80 is a data file that records sales data for a product to be purchased by the member specified by the transaction ID in a transaction with the member and payment data for a charge amount of the transaction.

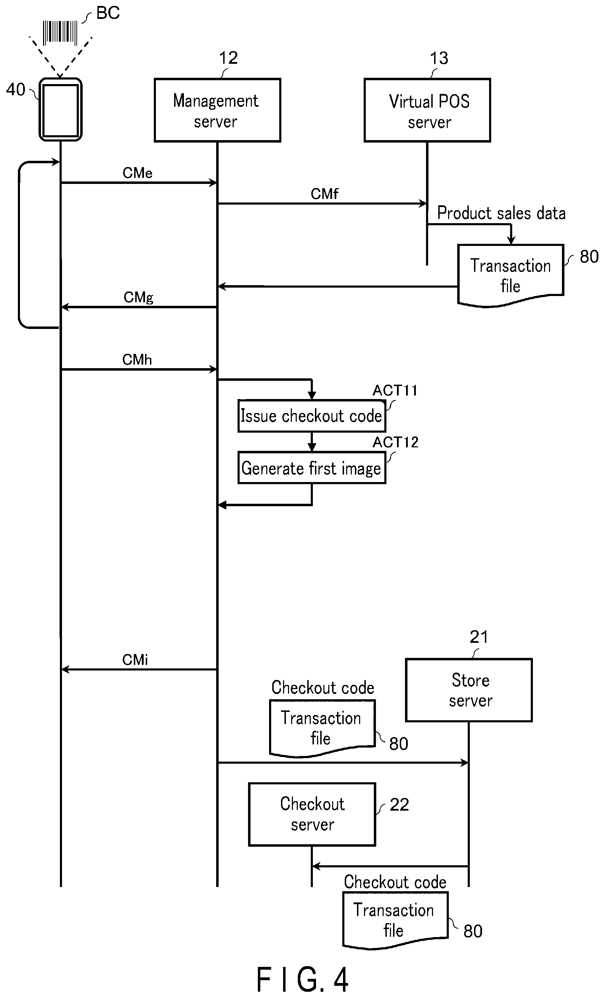

### <During purchases (see FIGS. 4, 7, 8, and 9)>

The member who has checked the purchase start screen touches the purchase start button. Then, the screen of the touch panel transitions to a registration-in-progress screen Sb (FIG. 7). As illustrated in FIG. 7, the total number and the total amount of registered products are displayed on the registration-in-progress screen Sb. However, since products to be purchased have not been registered yet, both the total number and the total amount are "0". In addition, a no-barcode button Bb, a scan button Bc, and a checkout button Bd are displayed on the registration-in-progress screen Sb. The no-barcode button Bb is a button to be touched to input data for a product without a barcode. The scan button Bc is a button to be touched to input data for a product with a barcode. The checkout button Bd is a button to be touched to start checkout after purchases. However, since products have not yet been registered, the checkout button Bd is inoperable. For example, the checkout button Bd is grayed out. The checkout button Bd may be deleted.

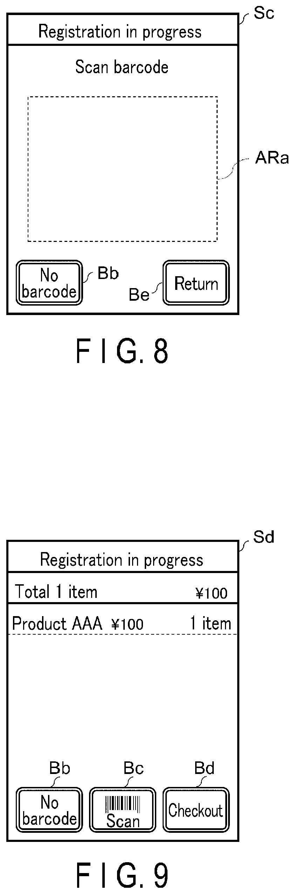

When finding a product to be purchased on the sales floor where products are displayed, the member checks whether a barcode BC (FIG. 4) is attached to the product. When the barcode BC is attached, the member touches the scan button Bc. When the scan button Bc is touched, the screen of the touch panel transitions to a scanning screen Sc (FIG. 8). As illustrated in FIG. 8, a frame ARa indicating a barcode reading area is displayed on the scanning screen Sc. In addition, the no-barcode button Bb and a return button Be are displayed. The return button Be is a button to be touched to stop scanning the barcode BC.

The member operates the smartphone 40 such that the barcode BC of the product to be purchased is within the frame ARa. When the barcode BC is within the frame ARa, the barcode BC is scanned by the camera of the smartphone 40.

The smartphone 40 that has scanned the barcode BC transmits a registration request command CMe (FIG. 4) to the management server 12 via the wireless LAN. The registration request command CMe includes the member ID and data of the barcode BC, so-called barcode data. The registration request command CMe is received by the access point 29, and is further transmitted from the router 28 to the management server 12 via the network 30.

The management server 12 searches the linkage table 70 with the member ID included in the registration request command CMe, and acquires the store ID and the transaction ID associated with the member ID. Then, the management server 12 transmits a registration request command CMf in which the member ID is replaced with the store ID and the transaction ID to the virtual POS server 13.

The virtual POS server 13 acquires the store ID, the transaction ID, and the barcode data from the registration request command CMf. Then, the virtual POS server 13 acquires the product code from the barcode data. The virtual POS server 13 searches the first product master 113 of the member store specified by the store ID, and acquires the product record including the product code. Then, based on the product data of the product record, the virtual POS server 13 registers product sales data including the product code, the product type, the product name, the price, the number of products, the sales amount, and the like in the transaction file 80 in which the store ID and the transaction ID are described.

The management server 12 acquires the transaction file 80 in which the product sales data is registered from the virtual POS server 13. Then, the management server 12 transmits a registration response command CMg (FIG. 4) to the smartphone 40 that is a transmission source of the registration request command CMe. The registration response command CMg includes the data of the transaction file 80 acquired from the virtual POS server 13. The registration response command CMg is transmitted from the router 15 to the POS system 20 via the network 30, and is further transmitted from the access point 29 to the smartphone 40.

In the smartphone 40 that has received the registration response command CMg, the screen of the touch panel transitions to a registration-in-progress screen Sd (FIG. 9). The registration-in-progress screen Sd is a screen when the product sales data related to a first product AAA is registered in the transaction file 80. As illustrated in FIG. 9, the sales amount "¥100" and the number of products "1" of the product AAA are displayed on the registration-in-progress screen Sd. The total number of products is "1", and the total amount is "¥100". In addition, the checkout button Bd is operable.

Thereafter, the member scans the barcode of a product by touching the scan button Bc for the second and subsequent products to be purchased. By the scanning, the management server 12 and the virtual POS server 13 operate similarly to the above. As a result, the product name, the sales amount, and the number of products, and the total number and the total amount of products to be purchased are displayed on the registration-in-progress screen Sd.

As described above, the sales amount of the product sales data stored in the transaction file 80 is calculated based on the price in the first product master 113. Even if the price of the first product master 113 is changed during the business hours, the change is not reflected. Therefore, the sales amount and the total amount displayed on the registration-in-progress screen Sd can be different from the amount based on the current price. Therefore, the sales amount and the total amount displayed on the registration-in-progress screen Sd are merely regarded as reference amounts during purchases.

When no barcode is attached to a product to be purchased, the member touches the no-barcode button Bb. Then, a list of products without barcodes is displayed on the touch panel of the smartphone 40, and the member selects the product to be purchased from the list. Then, the registration request command CMe including the product ID of the product to be purchased is transmitted to the management server 12. The subsequent operation is similar to the case where the barcode BC of a product is scanned with the smartphone 40.

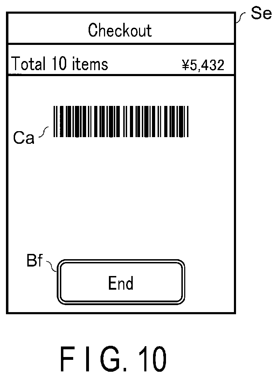

### <Before checkout (see FIGS. 4 and 10)>

The member who finishes purchases on the sales floor and starts checkout touches the checkout button Bd on the registration-in-progress screen Sd. When the checkout button Bd is touched, the smartphone 40 transmits a checkout request command CMh (FIG. 4) to the management server 12 via the wireless LAN. The checkout request command CMh includes the member ID. The checkout request command CMh is received by the access point 29 and transmitted from the router 28 to the management server 12 via the network 30.

The management server 12 issues a checkout code (FIG. 4, ACT11). The checkout code is, for example, a combination of a date, a time, and a serial number, and no duplicate checkout code is issued in at least one business day. The management server 12 generates a first image Ca (FIG. 10) (FIG. 4, ACT12). The first image Ca is an image obtained by barcoding the checkout code, that is, an image of a checkout barcode.

The management server 12 transmits a checkout approval command CMi to the smartphone 40 that is the transmission source of the checkout request command CMh. The checkout approval command CMi includes the first image Ca.

The checkout approval command CMi is transmitted to the POS system 20 via the network 30, and is transmitted from the access point 29 to the smartphone 40 via the wireless LAN. In the smartphone 40 that has received the checkout approval command CMi, the screen of the touch panel transitions to a checkout screen Se (FIG. 10). As illustrated in FIG. 10, the first image Ca is displayed on the checkout screen Se. In addition, an end button Bf is displayed on the checkout screen Se. The end button Bf is a button to be touched to cancel checkout.

In addition, the management server 12 acquires the store ID and the transaction ID stored in the linkage table 70 in association with the member ID acquired from the checkout request command CMh. Then, the management server 12 acquires the transaction file 80 in which the store ID and the transaction ID are described from the virtual POS server 13. Then, the management server 12 transmits the transaction file 80 and the checkout code to the POS system 20 of the member store identified by the store ID. As a result, the transaction file 80 and the data of the checkout code are transmitted to the store server 21 of the corresponding member store via the network 30. The store server 21 transfers the transaction file 80 and the data of the checkout code received from the management server 12 to the checkout server 22. The checkout server 22 stores the transaction file 80 in the memory in association with the checkout code.

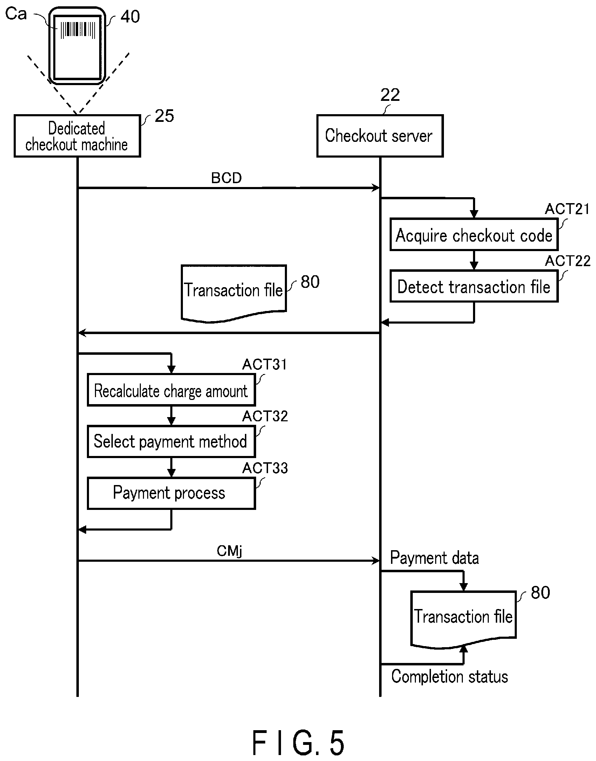

### <Checkout (see FIG. 5)>

The member who has checked the checkout screen Se performs the checkout by any of various payment methods, such as electronic money, a credit card, and cash, using the dedicated checkout machine 25.

With reference to FIG. 5, an operation of checkout using the dedicated checkout machine 25 is described.

The member scans the first image Ca on the checkout screen Se, that is, the checkout barcode with the scanner of the dedicated checkout machine 25. Then, the data of the checkout barcode, so-called barcode data BCD (FIG. 5) is transmitted from the dedicated checkout machine 25 to the checkout server 22.

The checkout server 22 acquires a checkout code from the barcode data BCD (FIG. 5, ACT21). Then, the checkout server 22 detects the transaction file 80 associated with the checkout code from the memory (FIG. 5, ACT22). The checkout server 22 transmits the transaction file 80 to the dedicated checkout machine 25.

The dedicated checkout machine 25 recalculates the charge amount with reference to the second product master 211 managed by the store server 21. Specifically, the dedicated checkout machine 25 acquires the product code registered in the transaction file 80. Then, the dedicated checkout machine 25 searches the second product master 211 and acquires the price of the product record including the product code. The dedicated checkout machine 25 multiplies the price by the number of products registered together with the product code in the transaction file 80 to calculate the sales amount of the product to be purchased specified by the product code. The dedicated checkout machine 25 performs the above processes for all the product codes registered in the transaction file 80. Then, the dedicated checkout machine 25 adds up the sales amounts of all the products to be purchased to calculate the charge amount.

The dedicated checkout machine 25 displays the recalculated charge amount on the display. Then, the dedicated checkout machine 25 waits for a payment method of the amount to be selected (FIG. 5, ACT32). The recalculated charge amount can be different from the total amount displayed on the smartphone 40. Even in this case, since the total amount displayed on the smartphone 40 is a reference amount, the customer pays the charge amount displayed on the dedicated checkout machine 25.

The member selects a payment method. For example, when cash is selected, the dedicated checkout machine 25 performs a payment process for paying the charge amount in cash (FIG. 5, ACT33). For example, when a credit card is selected, the dedicated checkout machine 25 performs a payment process for paying the charge amount by credit card. Note that since these payment processes are well-known processes, detailed description thereof is omitted here.

When the payment process is completed, the dedicated checkout machine 25 transmits a payment completion notification command CMj to the checkout server 22. The payment completion notification command CMj includes payment data. For example, in the case of payment in cash, the payment data is a deposit amount, a change amount, and the like. For example, in the case of payment by credit card, the payment data is a payment amount by credit card or the like.

The checkout server 22 registers the payment data in the transaction file 80. In addition, the checkout server 22 sets a completion status in the transaction file 80. The transaction file 80 to which the completion status is set is saved in the checkout server 22 or a recording unit of the store server 21.

### (Configuration of Monitoring server 26)

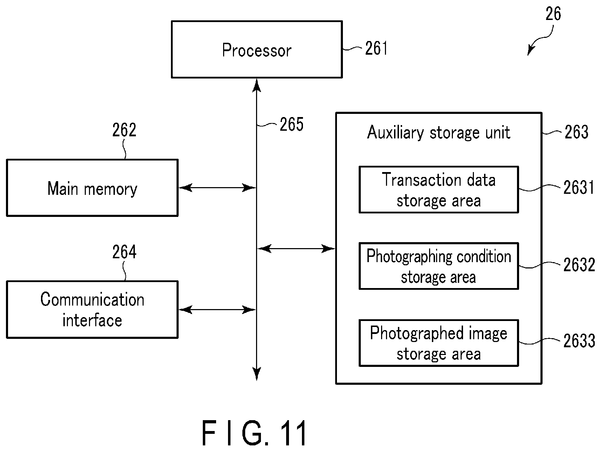

FIG. 11 is a block diagram schematically illustrating a configuration example of the monitoring server 26 according to an embodiment.

The monitoring server 26 includes a processor 261, a main memory 262, an auxiliary storage unit 263, a communication interface 264, and a transmission path 265. The processor 261, the main memory 262, the auxiliary storage unit 263, and the communication interface 264 can communicate via the transmission path 265. The monitoring server 26 constitutes a computer by the processor 261, the main memory 262, the auxiliary storage unit 263, and the transmission path 265 connecting them.

The processor 261 corresponds to a central part of the computer. The processor 261 controls each unit to realize various functions as the monitoring server 26 in accordance with an operating system and an application program. The processor 261 may be, for example, a processing circuit such as a central processing unit (CPU), a graphics processing unit (GPU), an application specific integrated circuit (ASIC), a programmable logic device (for example, a simple programmable logic device (SPLD), a complex programmable logic device (CPLD), or a field programmable gate array (FPGA)), or the like. The processor 261 is not limited to be configured as a single processing circuit, and may be configured as the processor 261 by combining a plurality of processing circuits.

The main memory 262 corresponds to a main storage part of the computer. The main memory 262 includes a nonvolatile memory area and a volatile memory area. The main memory 262 stores the operating system and the application program in the nonvolatile memory area. The main memory 262 can store data necessary for the processor to execute processing for controlling each unit in the nonvolatile or volatile memory area. The main memory 262 uses the volatile memory area as a work area in which data is appropriately rewritten by the processor. For example, the nonvolatile memory area is a read only memory (ROM). The volatile memory area is a random access memory (RAM).

The auxiliary storage unit 263 corresponds to an auxiliary storage part of the computer. For example, an electric erasable programmable read-only memory (EEPROM) (registered trademark), a hard disc drive (HDD), a solid state drive (SSD), or the like is used as the auxiliary storage unit 263. The auxiliary storage unit 263 saves data used when the processor 261 performs various processes and data created by processing in the processor 261. The auxiliary storage unit 263 can store the above application program.

The communication interface 264 performs data communication with each unit connected to the in-store network 27 in accordance with a predetermined communication protocol. As the communication interface 264, for example, a known communication device for LAN can be applied.

The transmission path 265 includes an address bus, a data bus, a control signal line, and the like, and transmits data and a control signal exchanged between the connected units.

The auxiliary storage unit 263 includes a transaction data storage area 2631, a photographing condition storage area 2632, and a photographed image storage area 2633.

The transaction data storage area 2631 stores first transaction data based on data stored in the virtual POS server 13. The first transaction data is an example of the information regarding a registration of a product via a plurality of smartphones 40. The information regarding the registration of the product includes information regarding a product registered via the smartphone 40 before settlement and information regarding a product registration via the smartphone 40. The information regarding the product includes information indicating the product type, the product price, the number of registered products, and the like. The product type includes, for example, information indicating an age-restricted product or the like, such as alcoholic beverages or cigarettes. The price indicates the unit price of the product. The number of registered products indicates the number of the products registered by a member. The information regarding the product registration includes information regarding a product registration operation via the smartphone 40 and information regarding a time associated with the product registration via the smartphone 40. The information regarding the product registration operation includes information regarding editing, such as adding and deleting a registered product, information regarding an operation of registering a product without a barcode, information regarding an operation of shifting to a checkout process, position information of a place where the product registration operation has been performed, and the like. The information regarding the time includes information indicating a staying time described later, a last operation time, and the like.

The first transaction data includes a first index file and a first transaction file. The first transaction data includes data corresponding to second transaction data, which will be described later, saved in each smartphone 40. The first index file is data associated with a plurality of first transaction files. The first index file is a collection of index file records created for each terminal ID. The first index file includes data corresponding to a second index file, which will be described later, saved in each smartphone 40. An index file record is a data record in which a terminal ID, a transaction ID, a staying time, a last operation time, the number of registered products, a status, a checkout machine ID, and the like are recorded in association with each other.

The terminal ID is a unique code set for each smartphone 40 in order to identify each smartphone 40. The transaction ID is a unique code set for each first transaction file in order to identify each first transaction file that records a transaction performed using the smartphone 40. Each time a first transaction file is created, the transaction ID is set in the first transaction file. The transaction ID is associated with the member ID and the store ID as in the linkage table 70. The staying time indicates an elapsed time after the member has logged in. The last operation time indicates the time when the member last operated the smartphone 40. For example, the last operation time indicates the time when the member registered the last product. The status is a terminal status indicating the state of the smartphone 40. The terminal status indicates "standby", "registering", and "checkout". "Standby" is a state between the end of checkout of the previous member and the login of the next member. "Registering" is a state from login by a member to approval of checkout. The state until checkout is approved is also referred to as a state before a checkout process is performed. "Checkout" is a state between the approval and end of checkout. The checkout machine ID is a unique code set for each checkout machine in order to identify each checkout machine. The first index file may include information such as the total amount of the registered products in addition to the items described above. The first index file is associated with the first transaction file by using the transaction ID as a key. Details of the first index file will be described later.

The first transaction file is a collection of transaction file records created for each transaction ID. A transaction file record is a data record in which a transaction ID and product sales data are recorded in association with each other. The product sales data includes the product code, the product type, the product name, the price, the number of products, the sales amount, and the like. The first transaction file may be data generated similarly to the transaction file 80. The first transaction file is updated each time a product is registered by a member. Details of the first transaction file will be described later.

The photographing condition storage area 2632 stores a photographing condition. The photographing condition indicates a condition for photographing a product to be purchased by smartphone 40. The photographing condition includes at least one of a condition regarding a product and a condition regarding a product registration. The photographing condition is a condition regarding a product or product registration to be monitored.

The condition regarding a product is a condition to be compared with the information regarding the product. The condition regarding the product includes, for example, a condition regarding the number, amount, type, and the like of registered products. The condition regarding the number of products may be, for example, one determined number, such as "5", or may be a number at regular intervals such as "a number that increases every 5". When the condition regarding the number of products is a number that increases every 5, the condition regarding the number of products includes a case where the number of registered products is a multiple of 5, such as 5, 10, or 15. Note that the interval may not be constant. The interval can be appropriately set by narrowing or widening the interval as the number of registered products increases. The condition regarding the number of products includes, for example, a condition that the number of registered products first reaches a predetermined number. That the number of registered products first reaches the predetermined number includes, for example, that the number of registered products first reaches 5, 10, or 15. The predetermined number includes multiples of 5, such as 5, 10, and 15. The predetermined number may be a number at constant intervals or may be a randomly set number. The condition regarding the amount is, for example, a high-value product such as "1000 yen or more". The condition regarding the type is, for example, "alcoholic drink" or the like.

The condition regarding a product registration includes a condition regarding a product registration operation and a condition regarding time. The condition regarding a product registration operation is a condition to be compared with the information regarding the product registration operation. The condition regarding the product registration operation includes, for example, a condition regarding editing, such as adding, deleting, or cancelling a registered product, a condition regarding an operation of registering a product without a barcode, a condition regarding an operation of shifting to an check out process, and a condition regarding position information of a place where the product registration operation has been performed. The condition regarding editing is, for example, "adding the number of products", "cancelling a registered product", or the like. The condition regarding the operation of registering a product without a barcode is, for example, that "a no-barcode button has been operated". The condition regarding the operation for shifting to a checkout process is, for example, that "a checking-out button has been operated". The condition regarding position information of a place where the product registration operation has been performed is, for example, that "the position where the product has been registered is different from the position where the registered product is arranged". The condition regarding time is a condition to be compared with the information regarding the time. The condition regarding the time includes, for example, a condition regarding a staying time duration and a condition regarding the last operation time. The condition regarding the staying time duration is, for example, that "the staying time duration exceeds a certain time duration". The condition regarding the last operation time is, for example, that "a certain period of time has passed from the last operation time". The certain period of time can be set as appropriate.

The photographing condition may be set in advance, or may be appropriately set or updated by a store manager or the like.

The photographed image storage area 2633 stores photographed image management data. The photographed image management data includes photographed image data photographed by the smartphone 40. The photographed image data includes data of an image obtained by photographing a product to be purchased by a member who possesses the smartphone 40. The photographed image storage area 2633 may store photographed image data indicating a plurality of photographed images in time series. The photographed image management data is updated each time the photographed image data is acquired by the acquisition unit 2612. The photographed image storage area 2633 stores photographed image management data in which photographed image data and information regarding photographing by which the photographed image data is acquired are associated with each other. The information regarding photographing includes information regarding a photographing condition such as "5th product" and "10th product", information regarding photographing a shopping basket position, a photographing time, and the like. The shopping basket position includes, for example, information about an upper tier, a lower tier, and the like of the cart.

Note that the hardware configuration of the monitoring server 26 is not limited to the above-described configuration. In the monitoring server 26, the above-described constituent elements can be appropriately omitted and changed, and a new constituent element can be added.

### (Configuration of Smartphone 40)

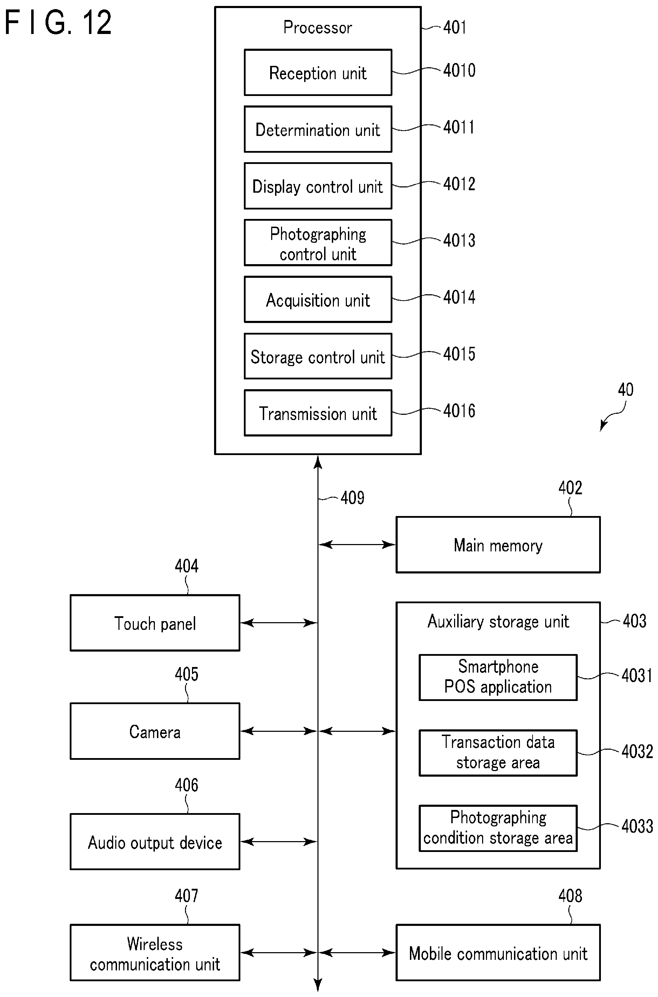

FIG. 12 is a block diagram schematically illustrating a configuration example of the smartphone 40 according to an embodiment.

The smartphone 40 includes a processor 401, a main memory 402, an auxiliary storage unit 403, a touch panel 404, a camera 405, an audio output device 406, a wireless communication unit 407, a mobile communication unit 408, a transmission path 409, and the like. The processor 401 can communicate with the main memory 402, the auxiliary storage unit 403, the touch panel 404, the camera 405, the audio output device 406, the wireless communication unit 407, and the mobile communication unit 408 via the transmission path 409. Then, the processor 401, the main memory 402, and the auxiliary storage unit 403 are connected by the transmission path 409, thereby configuring a computer for controlling the smartphone 40. Note that the outline of the functions of the processor 401, the main memory 402, the auxiliary storage unit 403, and the transmission path 409 is equivalent to those of the processor 261, the main memory 262, the auxiliary storage unit 263, and the transmission path 265, and thus the description thereof is omitted. The smartphone 40 is an example of the information processing terminal.

The touch panel 404 functions as an operation device and a display device of the smartphone 40. The touch panel 404 is an example of a display unit that displays information or a notification unit that provides a visual notification of information.

The camera 405 includes an optical system and an image sensor, and the image sensor generates image data representing an image in a visual field formed by the optical system. The camera 405 is an example of a photographing unit.

The audio output device 406 is a device capable of outputting sound under the control of the processor 401. The audio output device 406 is an example of an audio output unit that outputs information by audio or a notification unit that provides an audio notification of information.

The wireless communication unit 407 exchanges data with the access point 29 by wireless communication in accordance with a wireless communication protocol. As the wireless communication unit 407, for example, a known communication device conforming to the IEEE802.11 standard can be used.

The mobile communication unit 408 is an interface for data communication via the network 30. As the mobile communication unit 408, for example, a known communication device for performing data communication via a mobile communication network can be used.

The auxiliary storage unit 403 includes a smartphone POS application 4031, which is one of information processing programs, a transaction data storage area 4032, and a photographing condition storage area 4033. The auxiliary storage unit 403 is an example of a storage unit.

The smartphone POS application 4031 is an application program, and describes information processing for causing the smartphone 40 to function as a user interface of the POS system 20. The smartphone POS application 4031 is commonly used by a plurality of smartphones 40.

The transaction data storage area 4032 stores second transaction data based on the data stored in the virtual POS server 13. The second transaction data is an example of the information regarding a registration of a product via the smartphone 40. The second transaction data includes a second index file and a second transaction file. The second index file and the second transaction file include information regarding the product registered by the smartphone 40. The second index file configures data that associates a terminal ID, a transaction ID, a staying time, a last operation time, the number of registered products, a status, a checkout machine ID, and the like.

The terminal ID is a unique code set in order to identify the smartphone 40. The transaction ID is a unique code set for each second transaction file in order to identify each second transaction file that records a transaction performed using the smartphone 40. Each time a second transaction file is created, the transaction ID is set in the second transaction file. The transaction ID is associated with the member ID and the store ID as in the linkage table 70. The second index file includes an index file record associated with the terminal ID corresponding to each smartphone 40 in the first index file stored in the transaction data storage area 2631 of the monitoring server 26.

The second transaction file configures data that associates a transaction ID and product sales data. The product sales data includes the product code, the product type, the product name, the price, the number of products, the sales amount, and the like. The second transaction file may be data generated similarly to the transaction file 80. The second transaction file is updated each time a product is registered by a member. The second transaction file includes a transaction file record associated with the transaction ID corresponding to each smartphone 40 in the first transaction files stored in the transaction data storage area 2631 of the monitoring server 26.

The photographing condition storage area 4033 stores a photographing condition. The photographing condition is a photographing condition received from the monitoring server 26. The photographing condition may be a photographing condition according to the user (customer) of the smartphone 40, the store where the smartphone 40 is used, the time when the smartphone 40 is used, and the like among the photographing conditions stored in the photographing condition storage area 2632 of the monitoring server 26. As the photographing condition, different conditions may be set based on the store, the user, the store entry time, and the like. Note that he photographing conditions may be stored in the main memory 402.

Note that the hardware configuration of the smartphone 40 is not limited to the above-described configuration. In the smartphone 40, the above-described constituent elements can be appropriately omitted and changed, and a new constituent element can be added.

Each unit implemented in the above-described processor 401 is described.

The processor 401 implements a reception unit 4010, a determination unit 4011, a display control unit 4012, a photographing control unit 4013, an acquisition unit 4014, a storage control unit 4015, and a transmission unit 4016. Each unit implemented in the processor 401 can also be said as each function. It can also be said that each unit implemented in the processor 401 is implemented in a control unit including the processor 401 and the main memory 402.

The reception unit 4010 receives the photographing condition from the monitoring server 26 via the wireless communication unit 407 before a customer starts purchases. "Before a customer starts purchases" means, for example, "before the customer can register a product". "Before the customer starts purchases" means, for example, when the smartphone 40 receives the store entry approval command CMc from the management server 12. In this case, the reception unit 4010 receives the photographing condition from the monitoring server 26 based on the reception of the store entry approval command CMc.

The determination unit 4011 determines whether the second transaction data satisfies the photographing condition.

The display control unit 4012 allows the touch panel 404 to display an automatic photographing guidance for a product based on the determination result of the determination unit 4011. The automatic photographing guidance is, for example, a notification indicating that a product is automatically photographed. The automatic photographing guidance is text information such as "a product will be photographed" or "a product will be photographed in 5 seconds". The automatic photographing guidance may include a notification in any form, such as a symbol, an icon, an audio, or a moving image. When the automatic photographing guidance is audio, the processor 401 outputs the automatic photographing guidance to the audio output device 406. When the notification for prompting photographing is a moving image, the processor 401 outputs the automatic photographing guidance to the touch panel 404 and the audio output device 406. The automatic photographing guidance may include a photographing guide. The photographing guide includes a guide indicating a photographing range. The photographing guide may include, for example, text information such as "Please move the product to be within the photographing range". The photographing guide includes a guide that prompts the user to photograph a plurality of shopping baskets. The photographing guide may include, for example, text information such as "Do you have a shopping basket on the lower tier of the cart?", "The basket on the lower tier will be photographed", and "Please move the camera such that the basket on the lower tier is within the photographing range". In accordance with the photographing guide, the customer moves the smartphone 40 such that the basket on the lower tier is within the photographing range of the camera 405.

Note that the display control unit 4012 may display a notification for prompting photographing on the touch panel 404 instead of the automatic photographing guidance. The notification for prompting photographing is, for example, text information such as "Please take a photograph" for prompting the customer to photograph. The notification for prompting photographing may include a notification in any form, such as a symbol, an icon, an audio, or a moving image. When the notification for prompting photographing is audio, the processor 401 outputs an instruction regarding photographing of the product to the audio output device 406. When the notification for prompting photographing is a moving image, the processor 401 outputs an instruction regarding photographing the product to the touch panel 404 and the audio output device 406.

The photographing control unit 4013 outputs an instruction of photographing the product to the camera 405 based on the determination unit 4011 determining that the second transaction data satisfies the photographing condition. The instruction of photographing the product is an instruction for the processor 401 to control the camera 405. The processor 401 activates the camera 405 in response to the instruction of photographing the product, and controls the camera 405 to automatically photograph the product.

The acquisition unit 4014 acquires the photographed image data of the photographed product based on the automatic photographing of the product. The acquisition unit 4014 acquires the photographed image data of the photographed product based on the automatic photographing of the product under the control of the photographing control unit 4013.

The storage control unit 4015 stores the photographed image data acquired by the acquisition unit 4014 in the auxiliary storage unit 403. When the photographed image data is transmitted to the monitoring server 26 by the transmission unit 4016 described later, the storage control unit 4015 deletes the photographed image data. The storage control unit 4015 holds the photographed image data until the transmission unit 4016 transmits the photographed image data to the monitoring server 26. The storage control unit 4015 may delete the photographed image data after a certain period of time has elapsed since the image data was acquired. The certain period of time is, for example, one day.

The transmission unit 4016 transmits the photographed image data acquired by the acquisition unit 4014 to the monitoring server 26. When the photographed image data cannot be transmitted to the monitoring server 26, the transmission unit 4016 retransmits the photographed image data that could not be transmitted to the monitoring server 26. When the photographed image data acquired in the past is stored in the auxiliary storage unit 403, the transmission unit 4016 transmits the photographed image data acquired in the past to the monitoring server 26. The photographed image data acquired in the past is photographed image data that has been acquired in the past but has not been transmitted to the monitoring server 26. The photographed image data acquired in the past may be past photographed image data photographed during the same transaction, or may be past photographed image data photographed during another transaction. The other transaction may be, for example, a different transaction on the same day or a transaction on another day.

### (Configuration of Monitoring terminal 23)

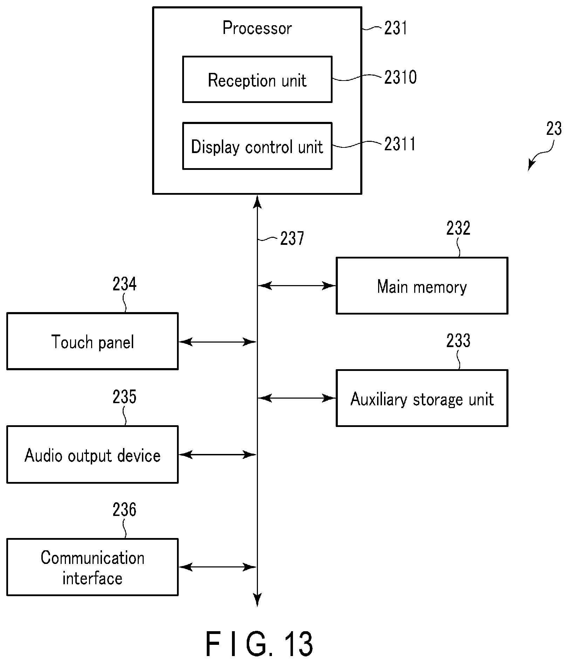

FIG. 13 is a block diagram schematically illustrating a configuration example of the monitoring terminal 23 according to an embodiment.

The monitoring terminal 23 includes a processor 231, a main memory 232, an auxiliary storage unit 233, a touch panel 234, an audio output device 235, a communication interface 236, a transmission path 237, and the like. The processor 231 can communicate with the main memory 232, the auxiliary storage unit 233, the touch panel 234, the audio output device 235, and the communication interface 236 via the transmission path 237. Then, the processor 231, the main memory 232, and the auxiliary storage unit 233 are connected by the transmission path 237, thereby configuring a computer for controlling the monitoring terminal 23. Note that the outline of the functions of the processor 231, the main memory 232, the auxiliary storage unit 233, and the transmission path 237 is equivalent to those of the processor 261, the main memory 262, the auxiliary storage unit 263, and the transmission path 265, and thus the description thereof is omitted.

The touch panel 234 functions as an operation device and a display device of the monitoring terminal 23. The touch panel 234 is an example of a display unit that displays information or a notification unit that provides a visual notification of information.

The audio output device 235 is a device capable of outputting sound under the control of the processor 231. The audio output device 235 is an example of an audio output unit that outputs information by audio or a notification unit that provides an audio notification of information.

The communication interface 236 performs data communication with each unit connected to the in-store network 27 in accordance with a predetermined communication protocol. As the communication interface 236, for example, a known communication device for LAN can be applied.

Note that the hardware configuration of the monitoring terminal 23 is not limited to the above-described configuration. In the monitoring terminal 23, the above-described constituent elements can be appropriately omitted and changed, and a new constituent element can be added.

Each unit implemented in the above-described processor 231 is described.

The processor 231 implements a reception unit 2310 and a display control unit 2311. Each unit implemented in the processor 231 can also be said as each function. It can also be said that each unit implemented in the processor 231 is implemented in a control unit including the processor 231 and the main memory 232.

The reception unit 2310 receives the photographed image data from the photographed image storage area 2633 of the monitoring server 26 via the access point 29. The reception unit 2310 updates the photographed image data each time the photographed image data is received from the smartphone 40.

The display control unit 2311 allows the touch panel 234 to display an attendant image based on the photographed image data. The attendant image includes, for example, a registered product details screen and a registered product checking screen. The registered product details screen shows details of registered products for each customer. The registered product details screen includes, for example, information such as a registration order of products, a product name, the number of registered products, an amount, and the like. The registered product checking screen shows an image of the photographed products. The registered product checking screen includes, for example, a thumbnail image of the image of the photographed product, an enlarged image of an image of a selected product, and the like. The display control unit 2311 updates the attendant image each time the photographed image data is updated. The display control unit 2311 allows the touch panel 234 to display the photographed image based on the photographed image data based on a display instruction by an attendant. The attendant may be read as a store clerk, a user, or a person.

A configuration example of the first index file is described.

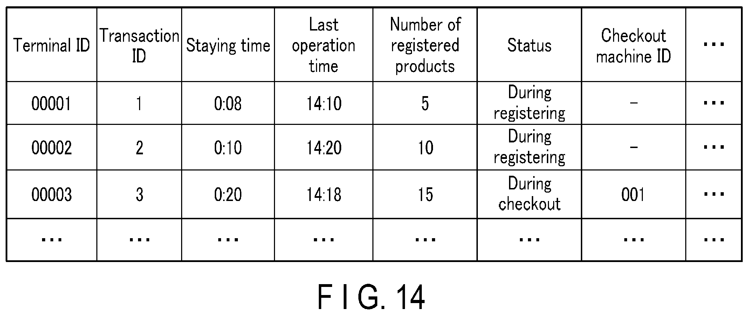

FIG. 14 is a diagram illustrating a main data structure of the first index file stored in the transaction data storage area 2631 according to an embodiment.

The first index file includes a "terminal ID" item, a "transaction ID" item, a "staying time" item, a "last operation time" item, a "number of registered products" item, a "status" item, and an "checkout machine ID" item. Each of a plurality of terminal IDs is associated with a transaction ID, a staying time, a last operation time, the number of registered products, a status, and a checkout machine ID as an index file record. For example, the smartphone 40 with the terminal ID "00001" is shown to be associated with the transaction ID "1". The smartphone 40 with the terminal ID "00001" is shown that the staying time, which is an elapsed time from login, is "8 minutes", and the last operation time, which is the last time at which the operation on the smartphone 40 is performed, is "14:10". The number of registered products by the smartphone 40 is "5", and the status shows "registering" which is before the checkout process is performed. In this example, the smartphone 40 with the terminal ID "00001" is in a state before the checkout process is performed and is not associated with a checkout machine, and the checkout machine ID is blank. The information included in the first index file can be set as appropriate. The monitoring server 26 appropriately updates the first index file. Note that the configuration example of the second index file stored in the transaction data storage area 4032 of the smartphone 40 includes only the index file record regarding the corresponding smartphone 40 in the configuration example of the first index file described above. For example, the smartphone 40 with the terminal ID "00001" stores only the index file record associated with the terminal ID "00001" in the transaction data storage area 4032.

A configuration example of the first transaction file is described.

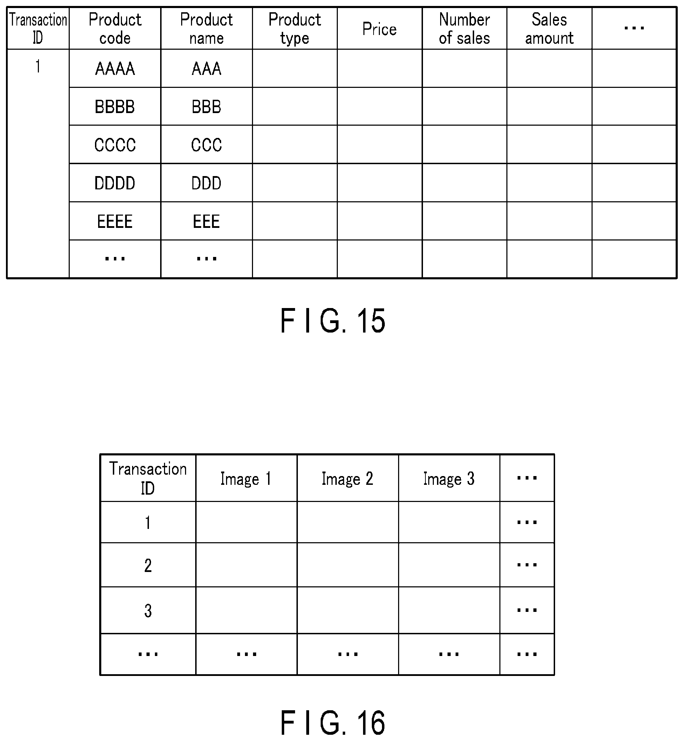

FIG. 15 is a diagram illustrating a main data structure of the first transaction file stored in the transaction data storage area 2631 according to an embodiment.

The first transaction file includes a "transaction ID" item, a "product code" item, a "product name" item, a "product type" item, a "price" item, a "number of products" item, and a "sales amount" item. Each of a plurality of transaction IDs is associated with a transaction ID, a product code, a product type, a product name, a price, the number of products, and a sales amount as a transaction file record. The first index file and the first transaction file are associated with each other by using the "transaction ID" as a key. The information included in the first transaction file can be set as appropriate. The monitoring server 26 appropriately updates the first transaction file. Note that the configuration example of the second transaction file stored in the transaction data storage area 4032 of the smartphone 40 includes only the information regarding the corresponding smartphone 40 in the configuration example of the first transaction file described above. For example, the smartphone 40 with the terminal ID "00001" stores only the first transaction file record of the "transaction ID" associated with the terminal ID "00001" in the transaction data storage area 4032.

A configuration example of the photographed image management data is described.

FIG. 16 is a diagram illustrating a main data structure of the photographed image management data stored in the photographed image storage area 2633 according to an embodiment.

The photographed image management data includes a "transaction ID" item and an "image" item. The "image" item sets photographed image data. Each of a plurality of transaction IDs is associated with the photographed image data as a photographed image data record. The monitoring server 26 may store the photographed image data in the photographed image storage area 2633 in time series based on the time when the photographed image data is acquired. The photographed image management data is associated with the first index file and the first transaction file using the "transaction ID" as a key. The monitoring server 26 appropriately updates the photographed image management data each time the photographed image data is acquired.

### (Guidance screen)

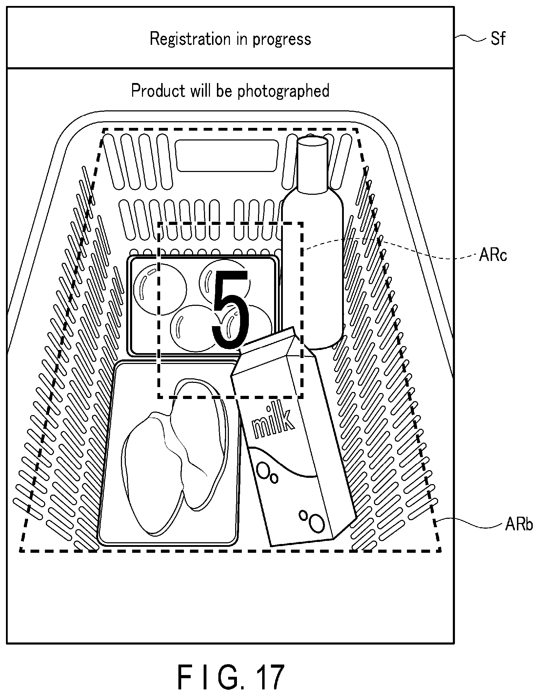

FIG. 17 is a schematic diagram illustrating an example of a guidance screen Sf displayed on the smartphone 40 according to an embodiment.

In response to the photographing condition having been satisfied, the smartphone 40 outputs an automatic photographing guidance for a product to the touch panel 404. FIG. 17 illustrates the guidance screen Sf on which the automatic photographing guidance is displayed. As illustrated in FIG. 17, on the guidance screen Sf, a frame ARb indicating a product photographing area and an area ARc indicating the automatic photographing guidance are displayed.

The frame ARb is set such that the entire shopping basket is within the frame, for example. For example, a member operates the smartphone 40 such that a product to be purchased put in the shopping basket is within the frame ARb. According to this example, the smartphone 40 can prompt the member to photograph the product in accordance with the frame ARb. As a result, the smartphone 40 can acquire photographed image data photographed within a certain, unified range. Therefore, the variation in photographed images of products is reduced. The attendant who checks the photographed image of a product with the monitoring terminal 23 can easily compare a plurality of photographed images photographed in time series.

The area ARc is, for example, an area including a display indicating the timing of automatic photographing. The area ARc may include, for example, a countdown display to the timing of automatic photographing. The countdown display of FIG. 17 includes "5" indicating that it is 5 seconds before the timing of automatic photographing. In the countdown display, a display mode changes according to the lapse of time. The countdown display may be a numerical notation or may be a display having a display mode that differs as time elapses, such as a symbol, an icon, or a bar.

Note that the smartphone 40 may not display the frame ARb. In this case, the smartphone 40 may automatically detect the area of the shopping basket, and set the photographing range of the camera 405 to include the shopping basket.

Note that the guidance screen Sf may include a photographing button. The member can manually photograph a product by touching the photographing button. For example, the member touches the photographing button while a product to be purchased is within the frame ARb. When the member touches the photographing button, the product to be purchased is photographed by the camera 405 of the smartphone 40.

### (Operation of Smartphone 40)

An information processing procedure by the smartphone 40 is described.

Note that the processing procedure described below is merely an example, and each process may be changed as much as possible. In addition, regarding the processing procedure described below, it is possible to appropriately omit, replace, and add steps according to an embodiment.

The following processes are performed during purchases.

The following processes are performed before a user (customer) of the smartphone 40 registers a product and shifts to a checkout process. The customer reads the code symbol attached to a product displayed in the store via the camera 405 to register the product. Each time a product is registered by the member, the information of the registered product is stored in the virtual POS server 13. The information of the registered product is also stored in the transaction data storage area 4032 of the smartphone 40 that cooperates with the virtual POS server 13. It is assumed that the customer uses the smartphone 40 with the terminal ID "00001" in FIG. 14 to register a product. The smartphone 40 with the terminal ID "00001" stores only the transaction data by the smartphone 40 with the terminal ID in the transaction data storage area 4032.

In the following example, a case where the photographing condition is a condition regarding the number of products is described. It is assumed that the condition regarding the number of products is set such that the number of registered products first reaches a predetermined number. The predetermined number is assumed to be a multiple of 5, such as 5, 10, and 15.

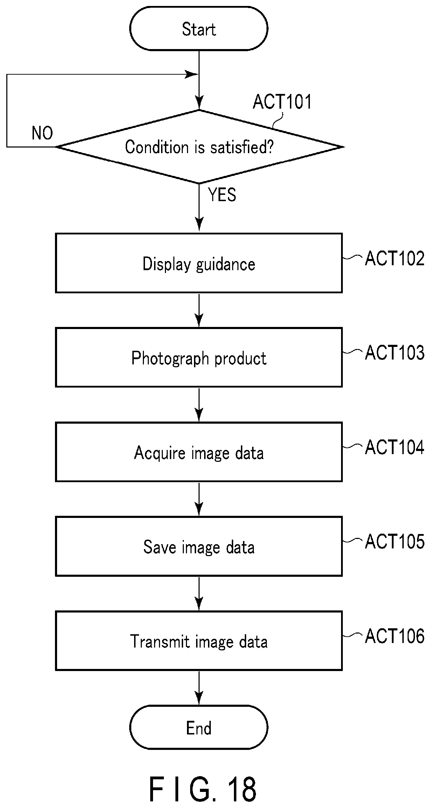

FIG. 18 is a flowchart illustrating an example of the information processing procedure by the smartphone 40 according to an embodiment.

The determination unit 4011 determines whether the second transaction data satisfies the photographing condition (ACT1). In ACT1, for example, the determination unit 4011 refers to the index file record associated with the terminal ID "00001" stored in the second index file, and compares the "number of registered products" with the number of products. When the determination unit 4011 determines that the "number of registered products" of the products registered in the second index file satisfies the photographing condition (ACT101: YES), the process transitions from ACT101 to ACT102. When the determination unit 4011 determines that the "number of registered products" of the products registered in the second index file does not satisfy the photographing condition (ACT101: NO), the process repeats ACT101.

For example, the determination unit 4011 compares the number of registered products "5" from the second index file associated with the terminal ID "00001" with the condition regarding the number of products. In this example, the determination unit 4011 determines that the "number of registered products" of the products registered in the second index file satisfies the photographing condition, and the process proceeds to YES in ACT101.

The display control unit 4012 allows the touch panel 404 to display the automatic photographing guidance for the product based on the determination result of the determination unit 4011 (ACT102). In ACT102, for example, the display control unit 4012 allows the touch panel 404 to display a notification indicating automatic photographing is to be performed. The display control unit 4012 may perform a countdown display indicating the timing of automatic photographing. Note that when the automatic photographing guidance is audio, the processor 401 outputs the automatic photographing guidance to the audio output device 406. When the automatic photographing guidance is a moving image, the processor 401 outputs the automatic photographing guidance to the touch panel 404 and the audio output device 406.

The photographing control unit 4013 controls the camera 405 to photograph the product (ACT103). In ACT103, for example, the photographing control unit 4013 outputs an instruction for photographing the product to the camera 405. The photographing control unit 4013 may allow the camera 405 to photograph the product in response to the acquisition of the determination result by the determination unit 4011. The photographing control unit 4013 may allow the camera 405 to photograph the product based on the fact that the timing of automatic photographing has been reached. The timing of automatic photographing may be after a predetermined time has elapsed since the automatic photographing guidance was displayed. The predetermined time is, for example, 5 seconds. Note that the photographing control unit 4013 may determine whether the product has been photographed by the automatic photographing. When the photographing control unit 4013 determines that the product has been photographed, the process proceeds from ACT103 to ACT104. When the photographing control unit 4013 determines that the product has not been photographed, the process returns from ACT103 to ACT102. In this case, the display control unit 4012 allows the touch panel 404 to display the automatic photographing guidance for the product. The smartphone 40 may repeat the processes from ACT102 to ACT103 until the product is successfully photographed.

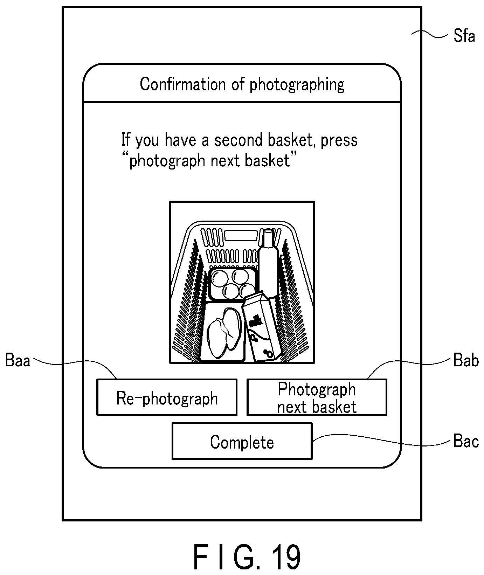

Note that the smartphone 40 may repeat the processes of ACT102 to ACT103 until all the shopping baskets are photographed. In this case, when there is another shopping basket on the lower tier of the cart, the display control unit 4012 may display a photographing guide prompting photographing for the lower tier on the touch panel 404. The photographing guide for prompting photographing for the lower tier is, for example, "If you have a second basket, press the "photograph next basket" button. FIG. 19 illustrates a display example of the photographing guide. A photographing guide screen Sfa illustrated in FIG. 19 includes text information indicating the photographing guide, a "re-photograph" button Baa, a "photograph next basket" button Bab, and a "complete" button Bac. The text information includes, for example, information such as "If you have a second basket, press the "photograph next basket" button". The "re-photographing" button Baa is a button for re-photographing the shopping basket by the customer. The "photograph next basket" button Bab is a button for photographing a basket on the lower tier when the basket is on the lower tier. The "complete" button Bac is a button for completing photographing. For example, when there is a basket on the lower tier, the customer selects the "photograph next basket" button Bab in accordance with the photographing guide. In response to the selection of the "photograph next basket" button Bab by the customer, the display control unit 4012 allows the touch panel 404 to display a notification indicating that the basket on the lower tier will be automatically photographed.

The acquisition unit 4014 acquires the photographed image data of the photographed product based on the automatic photographing of the product (ACT104). In ACT104, for example, the acquisition unit 4014 acquires the photographed image data of the product photographed by the camera 405. The acquisition unit 4014 acquires additional information regarding the photographed image data. The additional information includes information such as a time when the photographed image data was photographed, the photographing condition, and the position of the basket. The additional information includes, for example, information such as "15:30", "5th registered product", and "upper tier". The acquisition unit 4014 acquires the first photographed image data photographed by the camera 405 as photographed image data for the upper tier. The acquisition unit 4014 may acquire the photographed image data photographed by the camera 405 by the customer operating the "photograph next basket" button as photographed image data for the lower tier.

The storage control unit 4015 saves the acquired photographed image data of the product in the auxiliary storage unit 403 (ACT105). In ACT105, for example, the storage control unit 4015 saves the acquired photographed image data of the product in the auxiliary storage unit 403 in time series in association with the transaction ID and the additional information.

The transmission unit 4016 transmits the photographed image data acquired by the acquisition unit 4014 to the monitoring server 26 (ACT106). In ACT106, for example, the transmission unit 4016 transmits the photographed image data in association with the transaction ID and the additional information to the monitoring server 26. The monitoring server 26 outputs the photographed image data, the transaction ID, and the additional information to the monitoring terminal 23. The monitoring terminal 23 generates an attendant image based on the acquired image data, and allows the touch panel of the monitoring terminal 23 to display the attendant image. The monitoring image includes the photographed image of the product associated with the transaction data. The monitoring image may include a plurality of photographed images based on the photographed image data photographed at different timings in time series. The transmission unit 4016 may compress and transmit the photographed image data to the monitoring server 26.

Note that the processor 401 repeats the processes in ACT101 to ACT106 each time the second transaction data satisfies the photographing condition during a transaction. As described above, when the processor 401 repeats the processes in ACT101 to ACT106 a plurality of times during a transaction, the monitoring image can include a plurality of photographed images based on the photographed image data photographed at different timings in time series. In this case, the attendant who checks the photographed image of the product with the monitoring terminal 23 can check the change in the state in the shopping basket due to the change in the number of registered products in accordance with the increase in the number of registered products. Here, a case where the photographing condition is the condition regarding the number of products that "first reaches a predetermined number" has been described as an example, but the photographing condition is not limited thereto. For example, when the photographing condition is "reaching a predetermined number", the processor 401 may photograph a product each time the number of registered products reaches the predetermined number. For example, if the predetermined number is "5", when the number of registered products reaches 5, but the product registration is canceled thereafter, and the number of registered products reaches "5" again, the product may be photographed. Even in a case where the photographing condition is any of the above-described various conditions other than the condition regarding the number of products, the processor 401 repeats the processes in ACT101 to ACT106 each time the second transaction data satisfies the photographing condition during a transaction.

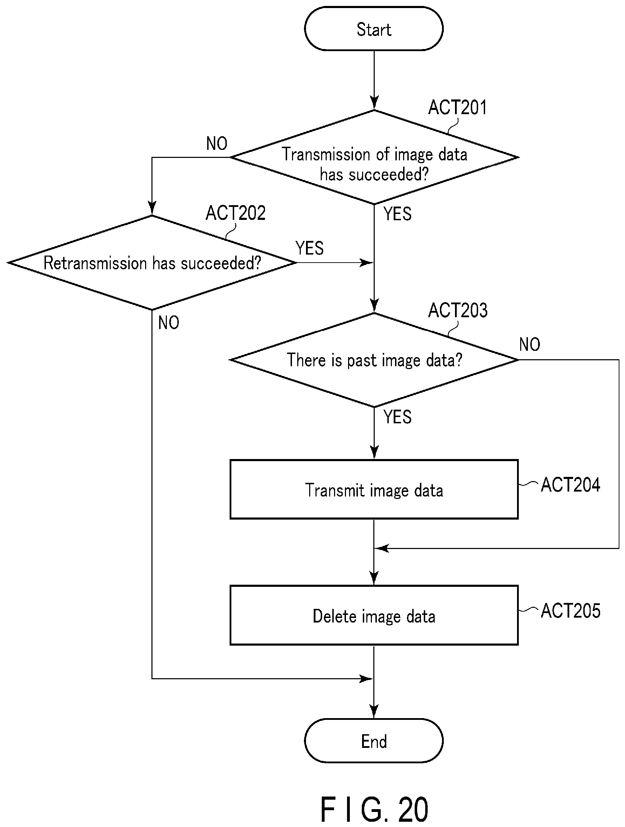

FIG. 20 is a flowchart illustrating another example of the information processing procedure by the smartphone according to an embodiment.

The following processes are information processing regarding transmission of photographed image data.

The transmission unit 4016 determines whether transmission of the photographed image data to the monitoring server 26 has succeeded (ACT201). In ACT201, for example, the transmission unit 4016 determines whether the photographed image data has been transmitted to the monitoring server 26 within a predetermined time. When the transmission unit 4016 determines that the transmission of the photographed image data has succeeded (ACT201: YES), the process transitions from ACT201 to ACT203. When the transmission unit 4016 determines that the transmission of the photographed image data has not succeeded (ACT201: NO), the process transitions from ACT201 to ACT202. The transmission unit 4016 retransmits the photographed image data that could not be transmitted.

The transmission unit 4016 determines whether the retransmission of the photographed image data to the monitoring server 26 has succeeded (ACT202). In ACT202, for example, the transmission unit 4016 determines whether the photographed image data has been transmitted to the monitoring server 26 within a predetermined time. When the transmission unit 4016 determines that the retransmission of the photographed image data has succeeded (ACT202: YES), the process transitions from ACT202 to ACT203. When the transmission unit 4016 determines that the retransmission of the photographed image data has not succeeded (ACT202: NO), the process is terminated.

The transmission unit 4016 determines whether photographed image data acquired in the past is stored in the auxiliary storage unit 403 (ACT203). For example, a case where transmission of photographed image data photographed at the time when the number of registered products was 10 has been succeeded, but photographed image data photographed at the time when the number of registered products was 5 has not been transmitted to the monitoring server 26 is described. The auxiliary storage unit 403 stores the photographed image data photographed at the time when the number of registered products was 5. The transmission unit 4016 acquires the photographed image data photographed at the time when the number of registered products was 5 from the auxiliary storage unit 403.

When the transmission unit 4016 determines that the photographed image data acquired in the past is stored in the auxiliary storage unit 403 (ACT203: YES), the process transitions from ACT13 to ACT14. When the transmission unit 4016 determines that the photographed image data acquired in the past is not stored in the auxiliary storage unit 403 (ACT203: NO), the process transitions from ACT13 to ACT15.

The transmission unit 4016 transmits the acquired photographed image data to the monitoring server 26 (ACT204). In ACT204, for example, the transmission unit 4016 transmits the photographed image data in association with the transaction ID and the additional information to the monitoring server 26. The transmission unit 4016 transmits the photographed image data photographed at the time when the number registered products was 5 to monitoring server 26. The monitoring server 26 outputs the photographed image data, the transaction ID, and the additional information to the monitoring terminal 23. The monitoring terminal 23 updates the attendant image based on the acquired image data.

The storage control unit 4015 deletes the photographed image data transmitted by the transmission unit 4016 from the auxiliary storage unit 403 (ACT205).

Note that when the transmission unit 4016 determines that the transmission or retransmission of the photographed image data to the monitoring server 26 has not been succeeded, the display control unit 4012 may pop up a warning message on the touch panel 404. The warning message includes, for example, text information such as "Image has not been transmitted" or "Please call a store clerk". When the settlement button is pressed by the customer, the transmission unit 4016 may determine whether there is photographed image data that has failed to be transmitted. When the transmission unit 4016 determines that there is photographed image data that has failed to be transmitted, the display control unit 4012 may display the warning message on the touch panel 404. The attendant can check the registered product with the monitoring terminal 23 based on the warning message. After the checking work by the attendant, the smartphone 40 may perform a process for settlement. The process for settlement includes, for example, a checkout process by the smartphone 40 and display of a checkout code.

### (Attendant screen)

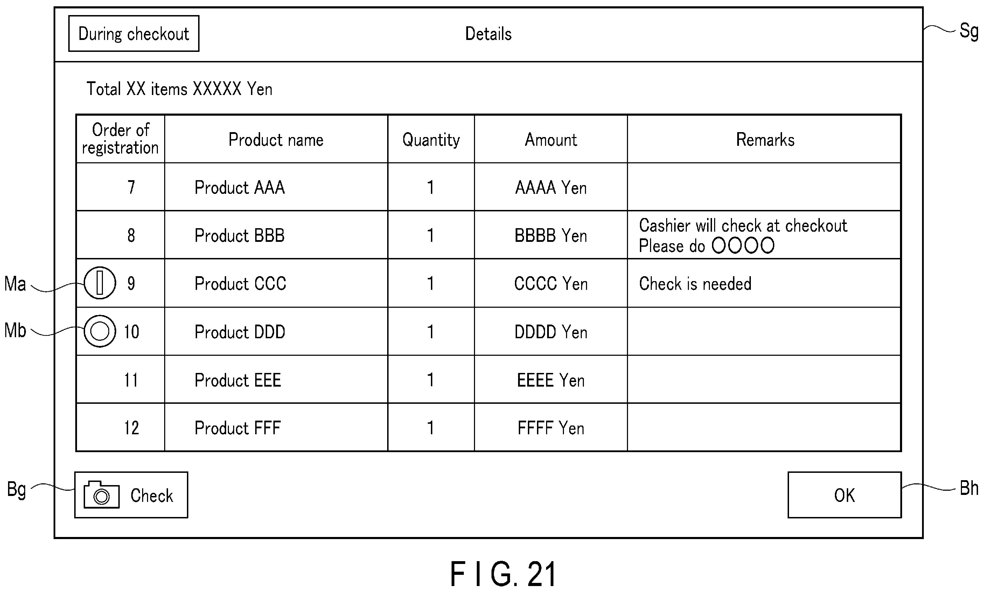

FIG. 21 is a schematic diagram illustrating an example of a registered product details screen Sg displayed on the monitoring terminal 23 according to an embodiment.

The monitoring terminal 23 displays the registered product details screen Sg on the touch panel 234 based on the photographed image data acquired from the monitoring server 26. The registered product details screen Sg is an example of the attendant image. The monitoring terminal 23 is used by the attendant.

The registered product details screen Sg includes registered product information such as a registration order of products, product name, quantity, amount, remarks, and the like. The registered product details screen Sg may be a list of the registered product information. The registration order of products indicates the order in which the products are registered by the member. The quantity indicates the number of registered products. The registered product information includes a mark Ma and a mark Mb. The mark Ma indicates a product that needs to be checked by the attendant, such as an age verification product. The mark Mb indicates a product satisfying the photographing condition. The registered product details screen Sg includes a check button Bg and an OK button Bh.

By selecting the mark Mb, the attendant can check the detailed information of a product with the mark Mb. The detailed information of a product includes, for example, a photographed image of the photographed product. In response to the selection of the mark Mb by the attendant, the monitoring terminal 23 may transition the display screen of the touch panel 234 from the registered product details screen Sg to the registered product checking screen. Note that the monitoring terminal 23 may transition the display screen of the touch panel 234 from the registered product details screen Sg to the registered product checking screen in response to selection of the area where the product name is displayed by the attendant. The area where the product name is displayed may be a row including the product name of the registered product specification list. Selection of the area where the product name is displayed by the attendant corresponds to selection of the record of the registered product. The monitoring terminal 23 may transition the display screen of the touch panel 234 from the registered product details screen Sg to the registered product checking screen based on the selection of the record of the registered product. In this case, the monitoring terminal 23 displays, in a photographed image area ARe of the registered product checking screen, the photographed image photographed at the time close to the registration time of the selected registered product. Note that the monitoring terminal 23 may transition the display screen of the touch panel 234 from the registered product details screen Sg to the registered product checking screen in response to selection of the mark Ma by the attendant.

The attendant can return from the registered product details screen Sg to an original screen by selecting the OK button Bh. In response to the selection of the OK button Bh by the attendant, the monitoring terminal 23 transitions the display screen of the touch panel 234 from the registered product details screen Sg to the original screen (not illustrated). The original screen may be, for example, an image including registration states of a plurality of members.

The attendant can check the detailed information of the product by selecting the check button Bg. In response to the selection of the check button Bg by the attendant, the monitoring terminal 23 transitions the display screen of the touch panel 234 from the registered product details screen Sg to the registered product checking screen.

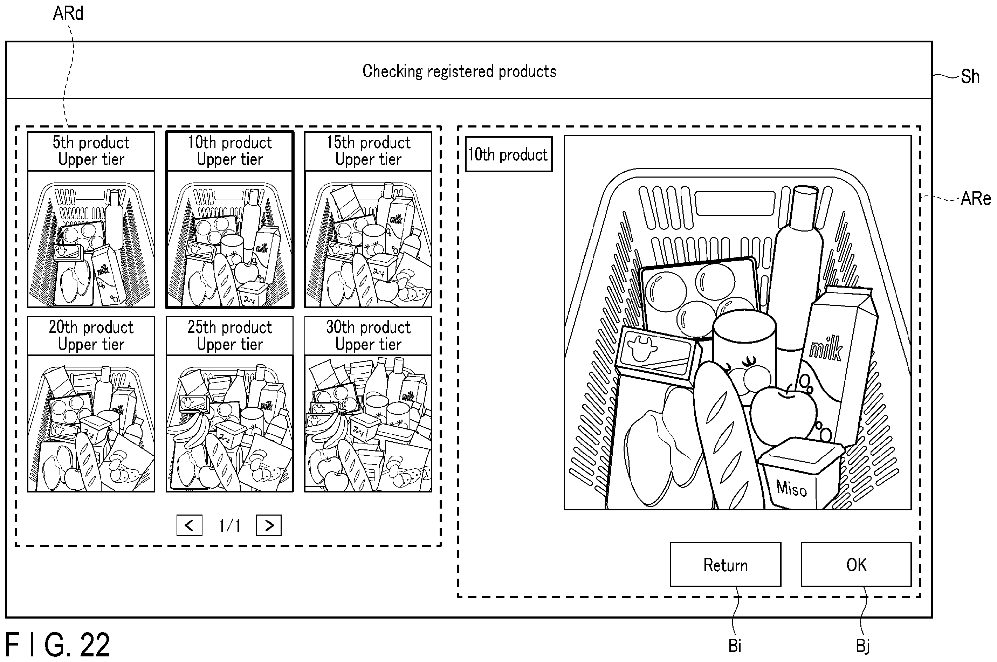

FIG. 22 is a schematic diagram illustrating an example of a registered product checking screen Sh displayed on the monitoring terminal 23 according to an embodiment.

The monitoring terminal 23 displays the registered product checking screen Sh on the touch panel 234 in response to the selection of the mark Mb by the attendant on the registered product details screen Sg. The monitoring terminal 23 may display the registered product checking screen Sh on the touch panel 234 in response to the selection of the area where the product name is displayed. The registered product checking screen Sh is an example of the attendant image.

The registered product checking screen Sh includes a thumbnail image area ARd and a photographed image area ARe. The registered product checking screen Sh includes a return button Bi and an OK button Bj.

The thumbnail image area ARd includes a thumbnail image, which is a reduced-size photographed image based on the photographed image data of the product. The thumbnail image may include identification information capable of identifying the photographed image data. The identification information includes, for example, the photographing condition. In the example of FIG. 22, each thumbnail image includes the number of registered products as the identification information. The identification information may include information indicating the position of the shopping basket. For example, the identification information includes "5th product", "upper tier", and the like. The identification information may include information indicating a situation in which the image was photographed. The situation in which the image was photographed includes, for example, product cancellation, cancellation correction, checkout, and the like. The identification information is included in the additional information regarding the photographed image data. The monitoring terminal 23 may display the thumbnail image corresponding to the image displayed in the photographed image area ARe in an identifiable display mode. In the example of FIG. 22, the monitoring terminal 23 displays the thumbnail image corresponding to the "10th product" image displayed in the photographed image area ARe in an identifiable display mode. The thumbnail image area ARd is not limited to the thumbnail image, and may include a symbol, an icon, or the like that can identify the photographed image.

The photographed image area ARe includes the photographed image at the time when the product selected by the attendant was photographed. The photographed image area ARe may be an enlarged image of the photographed image. The attendant can check the photographed image at the time when the selected product was photographed by the image displayed in the photographed image area ARe. The attendant can check the photographed image to check the number of registered products with the number of products in the shopping basket.

The attendant may select a thumbnail image included in the thumbnail image area ARd to display the photographed image corresponding to the selected thumbnail image in the photographed image area ARe. In response to the selection of the thumbnail image by the attendant, the monitoring terminal 23 displays the corresponding photographed image in the photographed image area ARe.

The attendant can return to the original screen by selecting the return button Bi. The original screen may be the registered product details screen Sg or the registered product checking screen when another product selected by the attendant is selected. In response to the selection of the return button Bi by the attendant, the monitoring terminal 23 transitions the display screen of the touch panel 234 from the registered product checking screen Sh to the original screen.

The attendant can return from the registered product checking screen Sh to the registered product details screen Sg by selecting the OK button Bj. In response to the selection of the OK button Bj by the attendant, the monitoring terminal 23 transitions the display screen of the touch panel 234 from the registered product checking screen Sh to the registered product details screen Sg.

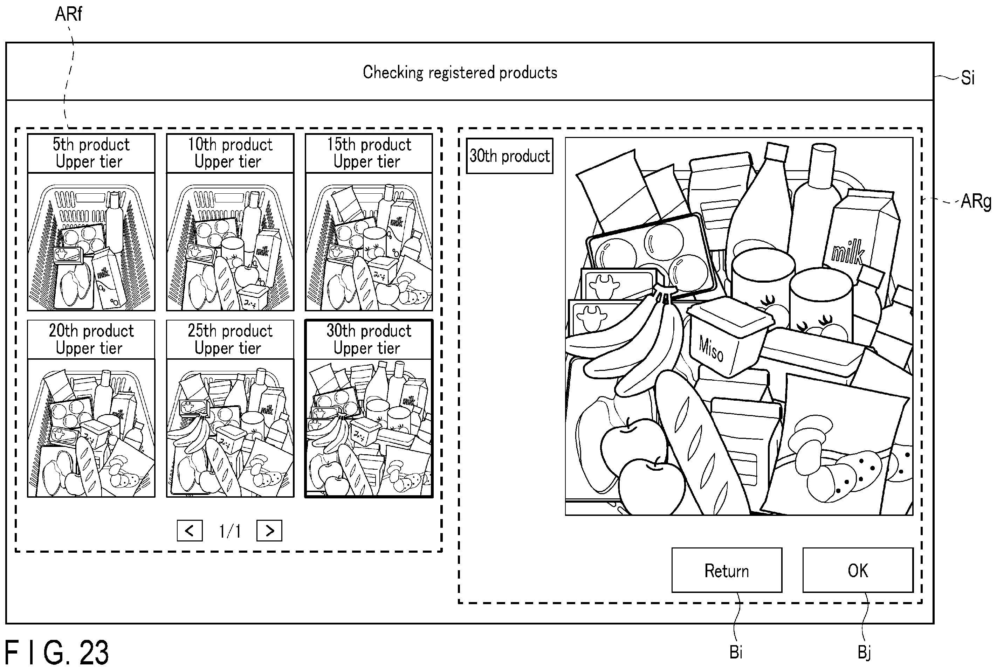

FIG. 23 is a schematic diagram illustrating an example of a registered product checking screen Si displayed on the monitoring terminal 23 according to an embodiment.

In response to selection of the check button Bg by the attendant on the registered product details screen Sg, the monitoring terminal 23 displays the registered product checking screen Si on the touch panel 234. The registered product checking screen Si is an example of the attendant image.

Similarly to FIG. 22, the registered product checking screen Si includes a thumbnail image area ARf and a photographed image area ARg. In this example, the monitoring terminal 23 displays the latest photographed image in the photographed image area ARg. Similarly to FIG. 22, the registered product checking screen Si includes the return button Bi and the OK button Bj. The latest photographed image is a photographed image at the latest photographing time in time series.

Similarly to the thumbnail image area ARd, the thumbnail image area ARf includes a thumbnail image, which is a reduced-size photographed image based on the photographed image data of the product. The monitoring terminal 23 may display the thumbnail image corresponding to the image displayed in a photographed image area ARg in an identifiable display mode. In the example of FIG. 23, the monitoring terminal 23 displays the thumbnail image corresponding to the latest photographed image displayed in the photographed image area ARg in an identifiable display mode. The thumbnail image area ARf is not limited to the thumbnail image, and may include a symbol, an icon, or the like that can identify the photographed image.

The photographed image area ARg includes the latest photographed image. The photographed image area ARg may be an enlarged image of the photographed image. The attendant can check the latest photographed image of the photographed product by the image displayed in the photographed image area ARg. The attendant can check the photographed image to check the number of registered products with the number of products in the shopping basket.

The attendant can select a thumbnail image included in the thumbnail image area ARf to display the photographed image corresponding to the selected thumbnail image in the photographed image area ARg. In response to the selection of the thumbnail image by the attendant, the monitoring terminal 23 displays the corresponding photographed image in the photographed image area ARg.

### (Operation of Monitoring terminal 23)

A processing procedure by the monitoring terminal 23 is described.

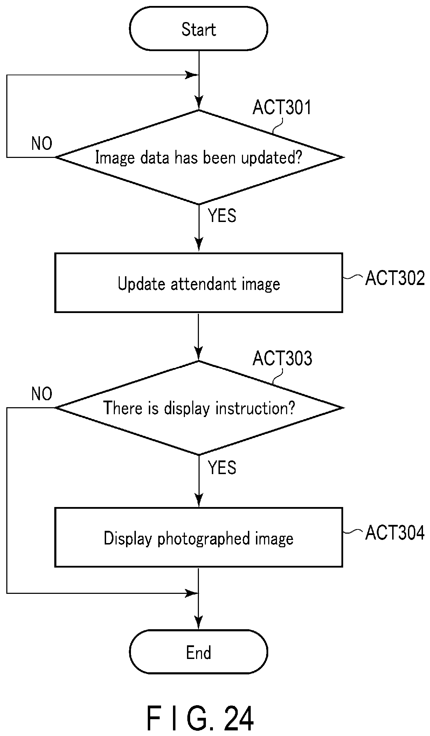

FIG. 24 is a flowchart illustrating an example of an information processing procedure by the monitoring terminal 23 according to an embodiment.

Note that the processing procedure described below is merely an example, and each process may be changed as much as possible. In addition, regarding the processing procedure described below, it is possible to appropriately omit, replace, and add steps according to an embodiment.

The following processes are performed during purchases described above.

The reception unit 2310 receives the photographed image data from the monitoring server 26 via the in-store network 27. The reception unit 2310 determines whether the photographed image data received from the monitoring server 26 has been updated (ACT301). When the reception unit 2310 determines that the photographed image data has been updated (YES in ACT301), the process transitions from ACT301 to ACT302. When the reception unit 2310 determines that the photographed image data has not been updated (ACT301: NO), the process repeats ACT301.

The display control unit 2311 updates the attendant image based on the photographed image data (ACT302). In ACT302, for example, the display control unit 2311 displays a mark indicating that there is photographed image data for a product satisfying the photographing condition on the registered product details screen. The mark may be, for example, an icon or a symbol indicating that there is photographed image data. The display control unit 2311 is not limited to the mark, and may be in any display mode as long as a product satisfying the photographing condition can be identified. The display mode includes character decoration such as a character color, a size, a font, an enclosed character, brightness, or luminance, a background color, brightness or luminance of a background, a background pattern, a frame color, blinking display, and the like.

The display control unit 2311 determines whether a display instruction for the registered product checking screen has been input by the attendant (ACT303). The display instruction includes inputting, on the registered product details screen by the attendant, a button or the like for displaying the registered product checking screen. The display instruction includes selecting, on the registered product details screen by the attendant, an area indicating a product satisfying the photographing condition. The area indicating the product satisfying the photographing condition corresponds to the area in the registered product details screen Sg where the product name is displayed or the mark Mb. The display instruction includes selecting the record of a registered product by the attendant. For example, when the display control unit 2311 determines that the display instruction has been input (ACT303: YES), the process transitions from ACT303 to ACT304. When the reception unit 2310 determines that the display instruction has not been input (ACT303: NO), the process is terminated.

The display control unit 2311 displays the registered product checking screen on the touch panel 234 based on the display instruction (ACT304). In ACT304, for example, the display control unit 2311 displays a registered product checking screen that differs according to the display instruction on the touch panel 234. For example, a case where the display instruction is selecting the area indicating a product satisfying the photographing condition is described. The display control unit 2311 displays the registered product checking screen Sh as illustrated in FIG. 22 on the touch panel 234. The registered product checking screen includes, for example, thumbnail images of the photographed images arranged in time series in an order that satisfies the photographing condition. The registered product checking screen includes an enlarged image of the photographed image of the product selected by the attendant. A case where the display instruction is inputting the button for displaying the registered product checking screen is described. The button for displaying the registered product checking screen corresponds to the check button Bg in the registered product details screen Sg. The display control unit 2311 displays a registered product checking screen as illustrated in FIG. 23 on the touch panel 234. The registered product checking screen includes, for example, thumbnail images of the photographed images arranged in time series in an order that satisfies the photographing condition. The registered product checking screen may include an enlarged image of the latest photographed image.

Note that the monitoring terminal 23 may save the photographed image data in the auxiliary storage unit 233 and display the attendant image on the touch panel 234 based on the saved photographed image data, or may display the attendant image on the touch panel 234 by a Web client function based on the photographed image data saved in the monitoring server 26.

### (Effect of Transaction processing system 100)

According to the present embodiment, the smartphone 40 can determine whether information regarding a registration of a product satisfies a photographing condition, display an automatic photographing guidance for the product based on a determination result, acquire, based on automatic photographing of the product, photographed image data of the photographed product, and transmit the acquired photographed image data. Accordingly, when the photographing condition is satisfied, the smartphone 40 can automatically photograph the product in the shopping basket and transmit the photographed image to the monitoring server 26. Therefore, the smartphone 40 can alert a customer not to forget to register a product or to perform a fraudulent registration. Furthermore, the smartphone 40 can display the automatic photographing guidance for the product to inform the customer to photograph the product. Since the customer can be informed the timing at which the product is photographed, it is possible to prevent the customer from forgetting to register the product or performing a fraudulent registration. In this manner, the smartphone 40 can prevent a customer from forgetting to register a product or performing a fraudulent registration. In addition, the monitoring server 26 can manage the photographed image data obtained by the automatic photographing. An attendant can check registered products of the customer based on the photographed image based on an attendant image displayed on the monitoring terminal 23.

According to the present embodiment, the smartphone 40 can perform automatic photographing of a product when the number of registered products first reaches a predetermined number. Accordingly, when the same photographing condition is satisfied a plurality of times, the smartphone 40 can omit automatic photographing of the product. For example, when the photographing condition is that the number of registered products is 5, if the customer changes the number of registered products by canceling or the like after the number of the registered products reaches 5, the smartphone 40 does not perform automatic photographing at the time when the number of products reaches 5 again. Therefore, when the same photographing condition is reached a plurality of times, the smartphone 40 can omit the process for automatic photographing. In addition, the smartphone 40 can eliminate botheration felt by the customer due to automatic photographing performed many times.

According to the present embodiment, the smartphone 40 can receive the photographing condition before the customer starts purchases. Accordingly, the smartphone 40 can set a photographing condition that differs according to the store, the customer, the store entry time, and the like. Therefore, even in a case where the operation is different for each store, the smartphone 40 can easily change the setting of the photographing condition.

According to the present embodiment, the smartphone 40 can transmit the photographed image data stored in the storage unit to the monitoring server 26. Accordingly, the smartphone 40 can transmit the previously untransmitted photographed image data stored in the storage unit to the monitoring server 26 again. Therefore, the smartphone 40 can complement the photographed image data by transmitting the photographed image data at different occasions. The monitoring server 26 can easily manage the photographed image data.

According to the present embodiment, the smartphone 40 can transmit the photographed image data and the additional information related to the photographed image data to the monitoring server 26. Accordingly, the smartphone 40 can transmit the photographed image data and information regarding photographing, such as the photographing condition, in association with each other to the monitoring server 26. The monitoring server 26 can manage the photographed image data and information regarding photographing, such as the photographing condition, in association with each other. The attendant can check the registered products of the customer based on the photographed image and the additional information based on the attendant image displayed on the monitoring terminal 23.

Although the embodiment of the transaction processing system 100 has been described above, the embodiment is not limited thereto.

In the present embodiment, the smartphone operated by the customer on the sales floor may be a tablet terminal attached to a shopping cart. In this case, the tablet terminal includes a built-in camera or is connected to an external camera. In addition, the smartphone operated by the customer may be a smartphone that the store lends to the customer, or a smartphone personally owned by the customer.

In the present embodiment, the smartphone operated by the customer who has registered membership has been described as an example, but the present invention is not limited thereto. The customer may perform a product registration using the smartphone without registering membership.

In the present embodiment, the server system 10 is built using cloud computing. In this regard, the POS system 20 may include a function as the server system 10. That is, it is also possible to build the transaction processing system 100 in a store.

In the present embodiment, the server system 10 is configured by the database server 11, the management server 12, and the virtual POS server 13. The server system 10 may be configured by a server in which functions as the database server 11, the management server 12, and the virtual POS server 13 are integrated.

Similarly, in the POS system 20 of each store, instead of separating the functions of the store server 21, the checkout server 22, and the monitoring server 26, the functions of the store server 21, the checkout server 22, and the monitoring server 26 may be integrated by a server.

The information processing terminal according to the above-described embodiment may be expressed as follows.
(1) An information processing terminal comprising:
   a determination unit configured to determine whether information regarding a registration of a product satisfies a photographing condition;
   a display control unit that allows a display unit to display an automatic photographing guidance for the product based on a determination result of the determination unit;
   an acquisition unit configured to acquire, based on automatic photographing of the product, photographed image data of the photographed product; and
   a transmission unit configured to transmit the photographed image data acquired by the acquisition unit.
(2) The information processing terminal according to (1), wherein the photographing condition includes that the number of registered products first reaches a predetermined number.
(3) The information processing terminal according to (1) or (2), further comprising a reception unit configured to receive the photographing condition before a user starts purchases.
(4) The information processing terminal according to any one of (1) to (3), wherein the transmission unit is configured to transmit the photographed image data stored in a storage unit.
(5) The information processing terminal according to any one of (1) to (4), wherein the transmission unit is configured to transmit the photographed image data and additional information regarding the photographed image data.
(6) An information processing program causing a computer to execute:
   a determination function of determining whether information regarding a registration of a product satisfies a photographing condition;
   a display control function of displaying an automatic photographing guidance for the product based on a determination result;
   an acquisition function of acquiring, based on automatic photographing of the product, photographed image data of the photographed product; and
   a transmission function of transmitting the photographed image data.

In addition, although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope of the invention and are included in the invention described in the claims and the equivalent scope thereof.

## Claims

1. An information processing terminal comprising:
a determination unit configured to determine whether information regarding a registration of a product satisfies a photographing condition;
a display control unit configured to allow a display unit to display an automatic photographing guidance for the product based on a determination result of the determination unit;
an acquisition unit configured to acquire, based on automatic photographing of the product, photographed image data of the photographed product; and
a transmission unit configured to transmit the photographed image data acquired by the acquisition unit.

2. The information processing terminal according to claim 1, wherein the photographing condition includes a condition that a number of registered products first reaches a predetermined number.

3. The information processing terminal according to claim 1, further comprising a reception unit configured to receive the photographing condition before a user starts purchases.

4. The information processing terminal according to claim 1, wherein the transmission unit is configured to transmit photographed image data stored in a storage unit.

5. The information processing terminal according to claim 1, wherein the transmission unit is configured to transmit the photographed image data and additional information regarding the photographed image data.

6. A recording medium recording an information processing program enabling a computer to execute:
a determination function of determining whether information regarding a registration of a product satisfies a photographing condition;
a display control function of displaying an automatic photographing guidance for the product based on a determination result;
an acquisition function of acquiring, based on automatic photographing of the product, photographed image data of the photographed product; and
a transmission function of transmitting the photographed image data.
